# EUROPEAN PATENT APPLICATION

(11) **EP 4 611 284 A1**
(43) Date of publication of application: **03.09.2025**
(21) Application number: 23882456.9
(22) Date of filing: 13.10.2023
(51) Int. Cl.: H04B 10/80, G05D 1/00

(54) **OPTICAL COMMUNICATION SYSTEM, BASE STATION DEVICE, AND MANAGEMENT DEVICE**

(30) Priority: 26.10.2022 JP 2022171106
(71) Applicant: Kyocera Corporation, Kyoto-shi, Kyoto 612-8501 (JP)
(72) Inventor: NAKAO, Masaki, Kyoto-shi, Kyoto 612-8501 (JP)
(74) Representative: Viering, Jentschura & Partner mbB Patent- und Rechtsanwälte
(86) International application number: PCT/JP2023/037227
(87) International publication number: WO 2024/090249

(57) **Abstract**

A system performs optical communication underwater. The optical communication system includes: a base station apparatus configured to perform optical communication with a terminal apparatus underwater; and a movement mechanism provided in the base station apparatus or connected with the base station apparatus. The movement mechanism moves the base station apparatus on a water surface and/or underwater.

## Description

### TECHNICAL FIELD

The present disclosure relates to an optical communication system, a base station apparatus, and a management apparatus.

### BACKGROUND OF INVENTION

A known optical communication system uses light (particularly visible light) as a transmission medium for underwater communication, for example. Since light has high directivity, a conventional optical communication system generally performs one-to-one communication with a transmission side and a reception side facing each other on the assumption that an optical communication apparatus of the transmission side and an optical communication apparatus of the reception side are fixed.

### CITATION LIST

### PATENT LITERATURE

Patent Document 1: Japanese application publication No. 4-103232 A

### SUMMARY

In a first aspect, an optical communication system is a system for performing optical communication underwater. The optical communication system includes: a base station apparatus configured to perform optical communication with a terminal apparatus underwater; and a movement mechanism provided in the base station apparatus or connected with the base station apparatus. The movement mechanism moves the base station apparatus on a water surface and/or underwater.

In a second aspect, a base station apparatus is a base station apparatus to be used in an optical communication system and includes: an optical communicator configured to perform optical communication with a terminal apparatus underwater; and a movement mechanism configured to move the base station apparatus on a water surface and/or underwater.

In a third aspect, a management apparatus is a management apparatus to be used in an optical communication system and includes: a communicator configured to communicate with a base station apparatus configured to perform optical communication with a terminal apparatus underwater; and a controller configured to determine an arrangement position of the base station apparatus and notify the base station apparatus of instruction information for designating the arrangement position.

### BRIEF DESCRIPTION OF THE DRAWINGS

FIG. 1 is a diagram illustrating a configuration example of an optical communication system according to an embodiment.
FIG. 2 is a diagram schematically illustrating a transmission operation in an uplink (UL) of a terminal apparatus according to an embodiment.
FIG. 3 is a diagram illustrating a block configuration example of a base station apparatus according to an embodiment.
FIG. 4 is a diagram illustrating an outer appearance configuration example of an optical communicator of the base station apparatus according to an embodiment.
FIG. 5 is a diagram illustrating a first variation of the outer appearance configuration of the optical communicator of the base station apparatus according to an embodiment.
FIG. 6 is a diagram illustrating a second variation of the outer appearance configuration example of the optical communicator of the base station apparatus according to an embodiment.
FIG. 7 is a diagram illustrating a block configuration example of the terminal apparatus according to an embodiment.
FIG. 8 is a diagram illustrating an outer appearance configuration example of the terminal apparatus according to an embodiment.
FIG. 9 is a diagram illustrating the first variation of the outer appearance configuration example of the terminal apparatus according to an embodiment.
FIG. 10 is a diagram illustrating a second variation of an outer appearance configuration example of the terminal apparatus according to an embodiment.
FIG. 11 is a diagram illustrating downlink (DL) communication that is an example of optical communication according to an embodiment.
FIG. 12 is a diagram illustrating a configuration example of a communication frame used in the optical communication system according to an embodiment.
FIG. 13 is a diagram illustrating a block configuration example of the management apparatus according to an embodiment.
FIG. 14 is a diagram for explaining an operation example of the management apparatus according to an embodiment.
FIG. 15 is a diagram for explaining the operation example of the management apparatus according to an embodiment.
FIG. 16 is a diagram for explaining the operation example of the management apparatus according to an embodiment.
FIG. 17 is a diagram for explaining the operation example of the management apparatus according to an embodiment.
FIG. 18 is a diagram for explaining the operation example of the management apparatus according to an embodiment.
FIG. 19 is a diagram for explaining a first operation flow example of the management apparatus according to an embodiment.
FIG. 20 is a diagram for explaining a second operation flow example of the management apparatus according to an embodiment.
FIG. 21 is a diagram illustrating a first variation of an operation of the optical communication system according to an embodiment.
FIG. 22 is a diagram for explaining a second variation of the operation of the optical communication system according to an embodiment.
FIG. 23 is a diagram illustrating a third variation of the operation of the optical communication system according to an embodiment.
FIG. 24 is a diagram illustrating a variation of the configuration of the optical communication system according to an embodiment.

### DESCRIPTION OF EMBODIMENTS

It is assumed that future optical communication systems implement optical communication between a terminal apparatus and a base station apparatus similarly to wireless communication by radio waves on the ground. In such an optical communication system, a coverage area is constructed underwater by communication areas formed by a plurality of the base station apparatuses, and a terminal apparatus in the coverage area performs optical communication with the base station apparatus.

However, according to the conventional technology, a technology for appropriately arranging a plurality of the base station apparatuses such that a dead zone (coverage hole) is not produced in a coverage area underwater is not implemented, and it is difficult to construct a coverage area of optical communication underwater.

The present disclosure provides an optical communication system, a base station apparatus, and a management apparatus that enable smooth construction of coverage areas of optical communication underwater.

A optical communication system according to an embodiment will be described with reference to the drawings. In the description of the drawings, the same or similar parts are denoted by the same or similar reference signs. The optical communication system according to an embodiment is a system that performs optical communication underwater using visible light as an example of light. However, the optical communication system may be a system that performs optical communication using light such as infrared light other than visible light. Note that underwater means, for example, an ocean, a lake, a river, or the like.

### Configuration Example of Optical Communication System

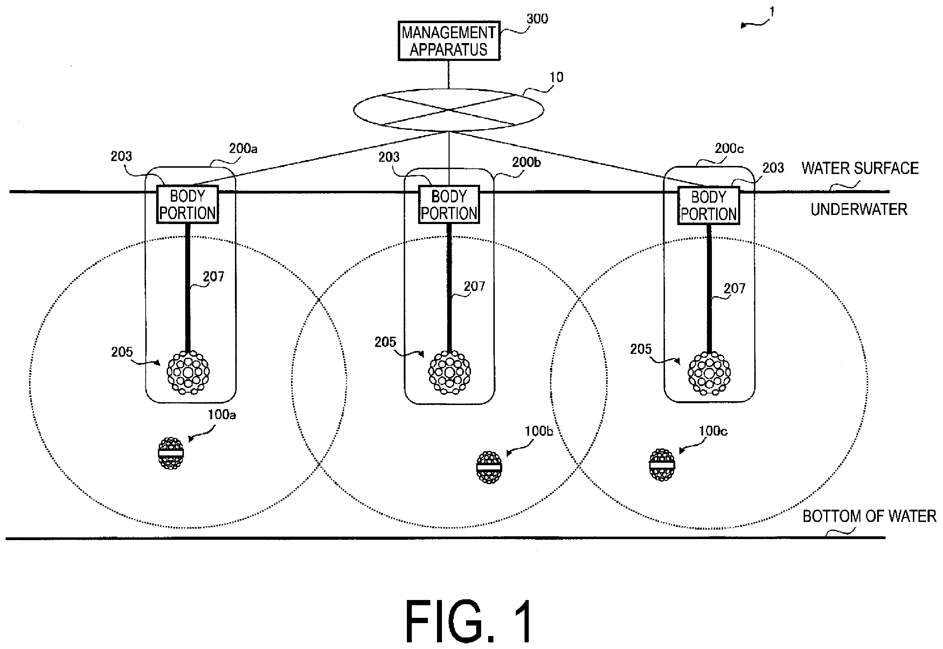

FIG. 1 is a diagram illustrating a configuration example of an optical communication system 1 according to the present embodiment. The optical communication system 1 includes a plurality of terminal apparatuses 100 (100a to 100c), a plurality of the base station apparatuses 200 (200a to 200c), and a management apparatus 300. However, the number of the terminal apparatuses 100 and the number of the base station apparatuses 200 are not limited to those in the illustrated example.

Each terminal apparatus 100 is an example of an optical communication apparatus. Each terminal apparatus 100 is underwater. Each terminal apparatus 100 is movable underwater. For example, each terminal apparatus 100 may be a self-propelled terminal apparatus 100 such as an underwater robot or an underwater drone. The terminal apparatus 100 is connected to any one of the base station apparatuses 200, and performs optical communication with the connection destination base station apparatus 200 (serving base station).

Each terminal apparatus 100 includes a plurality of light receivers/emitters whose optical axes (directivity of optical communication from a different point of view) are directed toward respectively different directions. Thus, each terminal apparatus 100 can perform optical communication for various methods (all directions) using a plurality of light receivers/emitters while using light as a transmission medium.

Each terminal apparatus 100 may include a sensor such as an image sensor and generate sensor data. For example, each terminal apparatus 100 may transmit uplink (UL) data including the sensor data to the base station apparatus 200 (serving base station) by optical communication. Each terminal apparatus 100 may receive downlink (DL) data including instruction data from the base station apparatus 200 (serving base station) by optical communication. The terminal apparatus 100 may move and perform a sensing operation (imaging or the like) based on the instruction data.

Each base station apparatus 200 is another example of an optical communication apparatus. To construct a wide coverage area underwater, a plurality of the base station apparatuses 200 is arranged at intervals in a horizontal direction. For example, each base station apparatus 200 may be temporarily installed during a period during which an investigation is performed underwater using the terminal apparatus 100. FIG. 1 illustrates a communication area of each base station apparatus 200 as a broken line. The communication area of each base station apparatus 200 will be also referred to as a cell. Each base station apparatus 200 is movable on a water surface and/or underwater. Each base station apparatus 200 can measure (i.e., perform positioning on) an own position.

Each base station apparatus 200 includes a body portion 203, an optical communicator 205, and a coupling member 207. The body portion 203 includes a floating member and is near the water surface. The body portion 203 may be arranged on an upper surface of the floating member and may be located above water. The body portion 203 is movable on the water surface in the horizontal direction. Note that the body portion 203 may be suspended from the floating member and located underwater. In this case, each antenna (e.g., an antenna for backhaul communication and/or an antenna for positioning) of the base station apparatus 200 may be provided in the floating member.

The body portion 203 is communicably connected with a network 10 via a backhaul line. The backhaul line may be a wireless line. The backhaul line may be a wired line. In the present embodiment, an example where the backhaul line is a wireless line will be mainly described. The body portion 203 performs wireless communication with the network 10 using radio waves. The body portion 203 may perform inter-base station communication with another base station apparatus 200 via the network 10.

The optical communicator 205 is arranged below the body portion 203 and forms a communication area of optical communication. The optical communicator 205 includes a plurality of light receivers/emitters whose optical axes are directed toward different directions. In the present embodiment, the optical communicator 205 includes, for example, a hemispherical housing and includes the plurality of light receivers/emitters in an array on the surface of the spherical housing. Thus, the optical communicator 205 performs optical communication for various methods (all directions) using the plurality of light receivers/emitters while using light as a transmission medium.

The coupling member 207 is a member that couples the body portion 203 and the optical communicator 205. The coupling member 207 may include a member such as a rope and/or a cable that can be wound and unwound. The rope may be a wire rope. The optical communicator 205 is suspended from the body portion 203 through the coupling member 207.

The optical communicator 205 is movable in a vertical direction. For example, the body portion 203 or the optical communicator 205 is provided with a mechanism that winds and unwinds the coupling member 207. The mechanism may include an electric winch. In the following embodiment, an example where the mechanism is provided in the body portion 203 will be mainly described.

In the illustrated example, each base station apparatus 200 includes only the one optical communicator 205. However, each base station apparatus 200 may include a plurality of the optical communicators 205. For example, another optical communicator 205 may be arranged below the one optical communicator 205, and the one optical communicator 205 may be coupled to the other optical communicator 205 through the coupling member 207.

Each base station apparatus 200 selects an own light receiver/emitter associated with a direction of each terminal apparatus 100 for each terminal apparatus 100 connected to each base station apparatus 200, and performs optical communication with the terminal apparatus 100 using the selected light receiver/emitter. Similarly, the terminal apparatus 100 selects an own light receiver/emitter associated with a direction of the base station apparatus 200 that is a serving base station (connection destination base station apparatus), and performs optical communication with the base station apparatus 200 using the selected light receiver/emitter.

Note that each base station apparatus 200 (each optical communicator 205) may transmit a synchronization light signal and/or a reference light signal unique to each base station apparatus 200 in all directions from all light receivers/emitters. The terminal apparatus 100 may specify the direction of the base station apparatus 200 based on these light signals, specify the own light emitter/receiver associated with the direction, and perform optical communication with the base station apparatus 200 using the specified light emitter/receiver.

The management apparatus 300 is an apparatus that manages each base station apparatus 200. The management apparatus 300 is connected to the network 10 and communicates with each base station apparatus 200 via the network 10. The network 10 may include the Internet. In the present embodiment, an example where the management apparatus 300 is a server apparatus provided on the Internet will be mainly described.

In this regard, the management apparatus 300 may be an apparatus that is provided in the any base station apparatus 200 that operates as a master (host) and manages each base station apparatus 200 by inter-base station communication. The management apparatus 300 may be an apparatus that performs direct wireless communication with each base station apparatus 200 without the network 10.

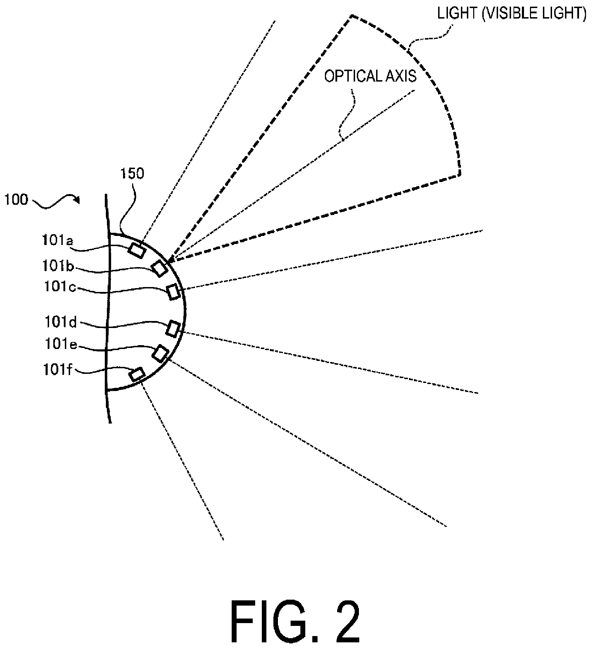

FIG. 2 is a diagram schematically illustrating a transmission operation of the terminal apparatus 100 in the UL according to the present embodiment.

In each terminal apparatus 100, for example, a plurality of light receivers/emitters 101 (light receivers/emitters 101a, 101b, and ...) is arranged in a transparent housing 150, and the light receiver/emitter 101 performs optical communication with the base station apparatus 200 via the housing 150. The plurality of light receivers/emitters 101 is aligned in an array along a curved inner surface of the housing 150, and has optical axes directed toward respectively different directions. For example, the optical axis of each light receiver/emitter 101 is directed toward a normal direction of the curved surface of the housing 150. The optical communicator 205 of each base station apparatus 200 may be also configured similarly. Such a configuration enables optical communication performed in various directions although light has high directivity.

### Configuration Example of Base Station Apparatus

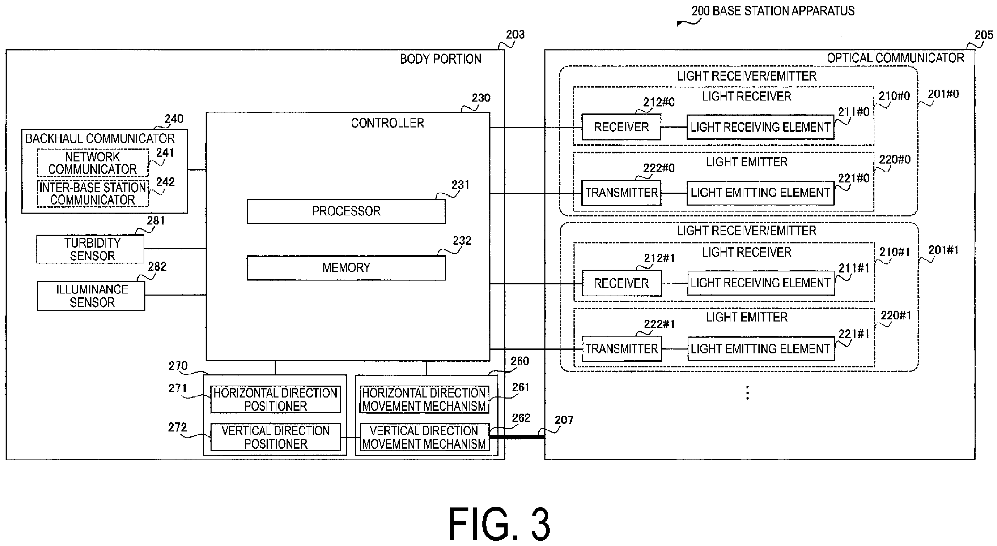

FIG. 3 is a diagram illustrating a block configuration example of the base station apparatus 200 according to the present embodiment. As described above, the base station apparatus 200 includes the body portion 203, the optical communicator 205, and the coupling member 207. The base station apparatus 200 may include a battery for supplying electrical power necessary for the base station apparatus 200 to operate.

The optical communicator 205 includes a plurality of light receivers/emitters 201 (201#0, 201#1, and ...).

The plurality of light receivers/emitters 201 is arranged with directivity (optical axes) of optical communication directed toward respectively different directions. Each light receiver/emitter 201 performs optical communication (visible optical communication in the present embodiment) with the terminal apparatus 100 under control of a controller 230. Each light receiver/emitter 201 includes a light receiver 210 and a light emitter 220. Since each light receiver/emitter 201 is configured in the same or a similar manner, the configuration of the light receiver/emitter 201#0 will be described here.

A light receiver 210#0 of the light receiver/emitter 201#0 receives an optical signal (a visible light signal in the present embodiment) from the terminal apparatus 100 and outputs the reception signal to the controller 230. The light receiver 210#0 includes at least one light receiving element 211#0 and a receiver 212#0. The light receiving element 211#0 may include a photodiode (PD) and a peripheral circuit thereof. The light receiving element 211#0 receives an optical signal, converts the received optical signal into an electrical signal (reception signal), and outputs the reception signal to the receiver 212#0. The optical axis of the light receiving element 211#0 is directed toward a predetermined direction different from the optical axis of the other light receiving element 211 (e.g., light receiving element 211#1). The receiver 212#0 may include a Field-Programmable Gate Array (FPGA) and/or a System on a Chip (SoC). The receiver 212#0 converts the reception signal output by the light receiving element 211#0, performs signal processing on the converted reception signal, and outputs the processed reception signal to the controller 230. At least a part of the receiver 212#0 may be integrated with other receivers 212 (e.g., receiver 212#1). At least a part of the receiver 212#0 may be integrated with transmitters 222.

A light emitter 220#0 of the light receiver/emitter 201#0 transmits an optical signal (a visible light signal in the present embodiment) to the terminal apparatus 100 under control of the controller 230. The light emitter 220#0 includes at least one light emitting element 221#0 and a transmitter 222#0. The light emitting element 221#0 may include a Laser Diode (LD) or a Light Emitting Diode (LED) and a peripheral circuit thereof. The light emitting element 221#0 converts an electrical signal (transmission signal) for optical communication output by the transmitter 222#0 into an optical signal and transmits the optical signal. The optical axis of the light emitting element 221#0 is directed toward a predetermined direction different from the optical axis of another light emitting element 221 (e.g., light emitting element 221#1). However, the optical axis of the light emitting element 221#0 is directed toward the same direction as that of the optical axis of the corresponding light receiving element 211#0. The transmitter 222#0 may include an FPGA and/or an SoC. The transmitter 222#0 performs signal processing on a transmission signal output by the controller 230, converts the signal after the signal processing, and outputs the converted signal to the light emitting element 221#0. At least a part of the transmitter 222#0 may be integrated with the other transmitter 222 (e.g., transmitter 222#1). At least a part of the transmitter 222#0 may be integrated with the receivers 212.

The body portion 203 includes the controller 230, a backhaul communicator 240, a movement mechanism 260, and a positioner 270. The body portion 203 may further include a turbidity sensor 281 and an illuminance sensor 282. In this regard, at least one of these functional blocks may be provided not on the body portion 203 side but on the optical communicator 205 side. At least one of these functional blocks may be provided in a dispersed manner to the body portion 203 and the optical communicator 205.

The controller 230 controls an overall operation of the base station apparatus 200. The operation of the above-described base station apparatus 200 and the operation of the below-described base station apparatus 200 may be operations performed under control of the controller 230. For example, the controller 230 controls the plurality of light receivers/emitters 201. The controller 230 includes at least one processor 231 and at least one memory 232. The memory 232 stores a program to be executed by the processor 231 and information to be used for processing by the processor 231. The processor 231 may include a digital signal processor and a Central Processing Unit (CPU). The digital signal processor performs modulation and demodulation, coding and decoding, and the like on digital signals. The CPU executes the program stored in the memory to thereby perform various types of processing. At least a part of the controller 230 may be integrated with the receiver 212. At least a part of the controller 230 may be integrated with the transmitter 222.

The backhaul communicator 240 performs backhaul communication via a backhaul line under control of the controller 230. The backhaul communicator 240 may include a network communicator 241 that performs communication with the network 10, and an inter-base station communicator 242 that performs inter-base station communication with a neighboring base station. For example, the network communicator 241 receives from the network 10 data to be transmitted to the terminal apparatus 100, and outputs the received data to the controller 230. The network communicator 241 transmits to the network 10 the data received by the light receiver/emitter 201 from the terminal apparatus 100. In the present embodiment, the network communicator 241 performs wireless communication using radio waves. Thus, the base station apparatus 200 can easily communicate with the network 10 on the assumption that the base station apparatus 200 moves.

The movement mechanism 260 moves the base station apparatus 200 on the water surface and/or underwater under control of the controller 230. The movement mechanism 260 includes a horizontal movement mechanism 261 that moves the body portion 203 in the horizontal direction, and a vertical movement mechanism 262 that moves the optical communicator 205 in the vertical direction. The horizontal movement mechanism 261 may include a motor and a screw. The body portion 203 can be moved in the horizontal direction by the motor by rotationally driving the screw configured to be steerable. The vertical movement mechanism 262 may include a mechanism such as an electric winch that winds and unwinds the coupling member 207. When the vertical movement mechanism 262 unwinds the coupling member 207, the optical communicator 205 moves downward by its own weight. On the other hand, when the vertical movement mechanism 262 winds the coupling member 207, the optical communicator 205 moves upward. Note that the vertical movement mechanism 262 may be provided not on the body portion 203 side but on the optical communicator 205 side. This optical communicator 205 can move the optical communicator 205 of the base station apparatus 200 (i.e., the communication area of the base station apparatus 200) three-dimensionally in the horizontal direction and the vertical direction.

The positioner 270 measures the position of the base station apparatus 200, and outputs position information indicating the measured position to the controller 230. The positioner 270 includes a horizontal positioner 271 that measures the latitude and longitude of the body portion 203, and a vertical positioner 272 that measures the depth of the optical communicator 205. The horizontal positioner 271 includes a Global Navigation Satellite System (GNSS) receiver that performs positioning by receiving satellite radio waves. Satellite radio waves greatly attenuate underwater, and therefore an antenna of the GNSS receiver is arranged so as to be located on the water surface or above the water. In the present embodiment, the vertical positioner 272 measures the depth of the optical communicator 205 based on the wound and unwound states of the coupling member 207. For example, the vertical positioner 272 may detect a rotation direction and a rotational speed of the electric winch constituting the vertical movement mechanism 262, specify the length of the coupling member 207 between the body portion 203 located on the water surface and the optical communicator 205 located underwater, and measure the length as the depth of the optical communicator 205. In this regard, the vertical positioner 272 may include a depth sensor provided on the optical communicator 205 side. For example, the depth sensor may measure the depth from a water pressure applied to the optical communicator 205. This movement mechanism 260 can perform positioning on the position of the optical communicator 205 of the base station apparatus 200 (i.e., the center of the communication area of the base station apparatus 200) three-dimensionally in the horizontal direction and the vertical direction. The controller 230 may control the backhaul communicator 240 to transmit to the management apparatus 300 the position information indicating the position (the latitude, the longitude, and the depth) measured by the positioner 270.

The turbidity sensor 281 measures a parameter indicating turbidity in the surroundings of the base station apparatus 200 underwater, and outputs a measurement result to the controller 230. For example, the turbidity sensor 281 includes a light source and a light receiver arranged in a detector, the light receiver detects reflection light obtained when light projected into water is scattered by particles in the water, and the turbidity sensor 281 measures a turbidity value through a converter. Instead of providing the dedicated turbidity sensor 281, any one of the light receivers/emitters 201 of the optical communicator 205 may be used as the turbidity sensor. The controller 230 may control the backhaul communicator 240 to transmit information indicating the turbidity measured by the turbidity sensor 281 to the management apparatus 300.

The illuminance sensor 282 measures a parameter indicating illuminance in the surroundings of the base station apparatus 200 underwater, and outputs a measurement result to the controller 230. The illuminance sensor 282 includes a photodiode that generates a current corresponding to incident light. Instead of providing the dedicated illuminance sensor 282, each light receiver 210 of the optical communicator 205 may be used as an illuminance sensor. The controller 230 may control the backhaul communicator 240 to transmit information indicating the illuminance measured by the illuminance sensor 282 to the management apparatus 300.

The arrangement position of the base station apparatus 200 configured as described above is designated by the management apparatus 300. For example, the backhaul communicator 240 receives instruction information for designating the arrangement position of the base station apparatus 200 from the management apparatus 300. The instruction information is information for designating at least the position (the latitude and the longitude) in the horizontal direction of the base station apparatus 200. The instruction information may be information for designating the position (depth) in the vertical direction of the base station apparatus 200 (optical communicator 205) in addition to the position in the horizontal direction or instead of the position in the horizontal direction. Note that the instruction information may be absolute position information that directly indicates the arrangement position of the base station apparatus 200. The instruction information may be relative position information that relatively indicates the arrangement position of the base station apparatus 200 using the current position of the base station apparatus 200 as a reference.

Based on the position (the latitude, the longitude, and the depth) measured by the positioner 270, the controller 230 controls the movement mechanism 260 to move or maintain the base station apparatus 200 to or at the arrangement position designated by the management apparatus 300. When, for example, the latitude and the longitude are designated as the arrangement position by the management apparatus 300, the controller 230 controls the horizontal movement mechanism 261 to move or maintain the body portion 203 of the base station apparatus 200 to or at the latitude and the longitude. When the depth is designated as the arrangement position by the management apparatus 300, the controller 230 controls the vertical movement mechanism 262 to move or maintain the optical communicator 205 of the base station apparatus 200 to or at the depth.

Thus, the position of the base station apparatus 200 can be arbitrarily set, and the base station apparatus 200 can be moved to or maintained to or at an arbitrary position. By, for example, simultaneously releasing the plurality of the base station apparatuses 200 from a mother ship, a coast, or the like, and designating the arrangement position of each base station apparatus 200, a coverage area including the communication area of each base station apparatus 200 can be automatically constructed. Arrangement of the base station apparatuses 200 can be maintained, a fixture (e.g., a weight member or the like) of the base station apparatus 200 is unnecessary in a scene in which a flow rate is low in, for example, an inland sea and/or a dam lake. The depth can be designated as the arrangement position, so that, for example, the communication area of each base station apparatus 200 can be formed at an arbitrary position (e.g., near the water surface or near the bottom of water).

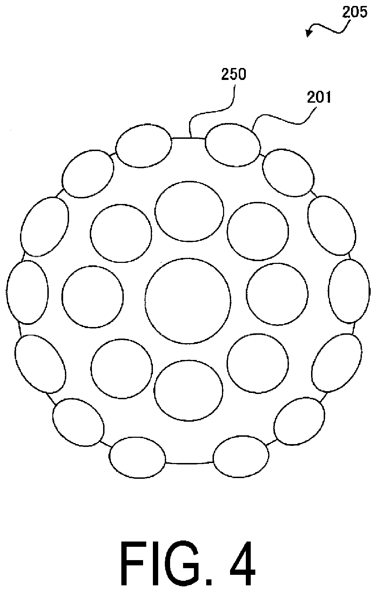

FIG. 4 is a diagram illustrating an outer appearance configuration example of the optical communicator 205 of the base station apparatus 200 according to the present embodiment.

The optical communicator 205 of the base station apparatus 200 includes a housing 250 of a spherical shape, and the plurality of light receivers/emitters 201 aligned in an array on the curved surface of the housing 250. In this regard, the housing 250 may be formed into a hemispherical shape. Each light receiver/emitter 201 includes a set of at least one light receiving element 211 and the at least one light emitting element 221. Such a configuration enables the optical communicator 205 of the base station apparatus 200 to perform optical communication with the terminal apparatuses 100 in various directions.

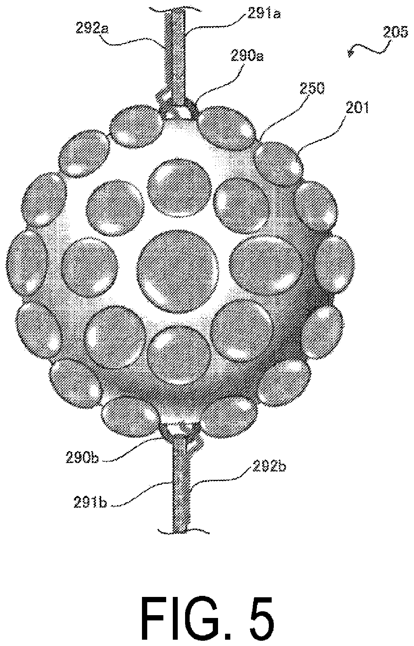

FIG. 5 is a diagram illustrating a first variation of the outer appearance configuration of the optical communicator 205 of the base station apparatus 200 according to the present embodiment.

The optical communicator 205 of the base station apparatus 200 includes a hook portion 290a provided at an upper end of the housing 250, a hook portion 290b provided at a lower end of the housing 250, a cable 292a extending upward from the housing 250, and a cable 292b extending downward from the housing 250. The cable 292a and the cable 292b may be formed as optical fibers. The cable 292a is used for communication with the body portion 203, and the cable 292b is used for communication with the optical communicator 205 on the lower side. A rope 291a is attached to the hook portion 290a on the upper side, and a rope 291b is attached to the hook portion 290b on the lower side. The cable 292a on the upper side is disposed along the rope 291a on the upper side, and the cable 292b on the lower side is arranged along the rope 291b on the lower side. The light receiver/emitter 201 on the surface of the housing 250 is arranged at a position that avoids the hook portion 290a and the hook portion 290b.

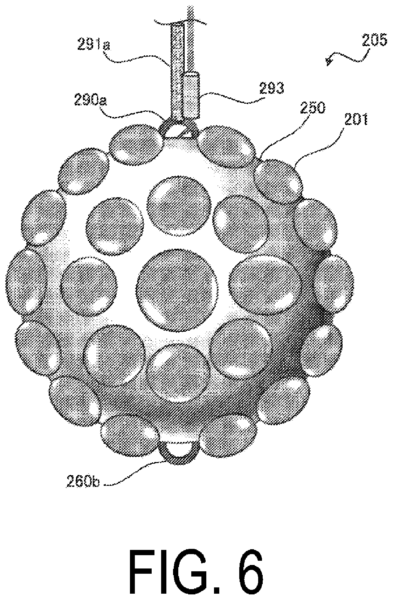

FIG. 6 is a diagram illustrating a second variation of the outer appearance configuration of the optical communicator 205 of the base station apparatus 200 according to the present embodiment.

In the present variation, the optical communicator 205 of the base station apparatus 200 includes the hook portion 290a provided at the upper end of the housing 250, the hook portion 290b provided at the lower end of the housing 250, and a laser communication device 293 provided on the upper side of the housing 250. The laser communication device 293 is used for communication with the body portion 203.

### Configuration Example of Terminal Apparatus

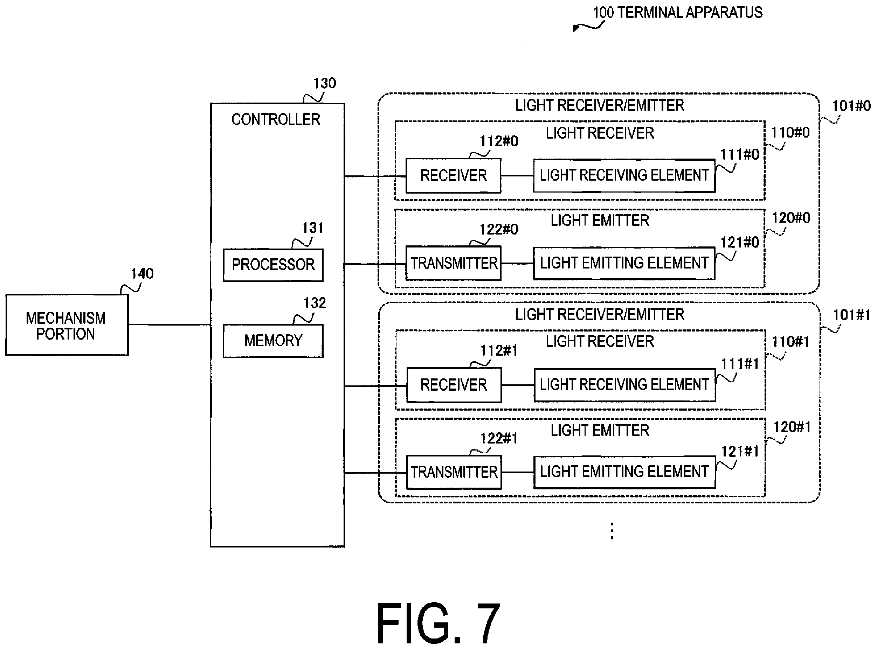

FIG. 7 is a diagram illustrating a block configuration example of the terminal apparatus 100 according to the present embodiment. The terminal apparatus 100 includes the plurality of light receivers/emitters 101 (101#0, 101#1, and ...), a controller 130, and a mechanism portion 140. The terminal apparatus 100 may include a battery for supplying electrical power necessary for the terminal apparatus 100 to operate. The terminal apparatus 100 may include a sensor such as an image sensor and generate sensor data.

The plurality of light receivers/emitters 101 is arranged with directivity (optical axes) of optical communication directed toward respectively different directions. Each light receiver/emitter 101 performs optical communication (visible optical communication in the present embodiment) with the base station apparatus 200 under control of the controller 130. Each light receiver/emitter 101 includes a light receiver 110 and a light emitter 120. Since each light receiver/emitter 101 is configured in the same or a similar manner, the configuration of a light receiver/emitter 101#0 will be described here.

A light receiver 110#0 of the light receiver/emitter 101#0 receives an optical signal (a visible light signal in the present embodiment) from the base station apparatus 200, and outputs the reception signal to the controller 130. The light receiver 110#0 includes at least one light receiving element 111#0 and a receiver 112#0. The light receiving element 111#0 may include a photodiode (PD) and a peripheral circuit thereof. The light receiving element 111#0 receives an optical signal, converts the received optical signal into an electrical signal (reception signal), and outputs the reception signal to the receiver 112#0. The optical axis of the light receiving element 111#0 is directed toward a predetermined direction different from the optical axes of other light receiving elements 111 (e.g., light receiving element 111#1). The receiver 112#0 may include an FPGA and/or an SoC. The receiver 112#0 converts the reception signal output by the light receiving element 111#0, performs signal processing on the converted reception signal, and outputs the processed reception signal to the controller 130. At least a part of the receiver 112#0 may be integrated with other receivers 112 (e.g., receiver 112#1). At least a part of the receiver 112#0 may be integrated with transmitters 122.

A light emitter 120#0 of the light receiver/emitter 101#0 transmits an optical signal (a visible light signal in the present embodiment) to the base station apparatus 200 under control of the controller 130. The light emitter 120#0 includes at least one light emitting element 121#0 and a transmitter 122#0. The light emitting element 121#0 may include a Laser Diode (LD) or a Light Emitting Diode (LED) and a peripheral circuit thereof. The light emitting element 121#0 converts an electrical signal (transmission signal) for optical communication output by the transmitter 122#0 into an optical signal and transmits the optical signal. The optical axis of the light emitting element 121#0 is directed toward a predetermined direction different from the optical axis of another light emitting element 121 (e.g., light emitting element 121#1). However, the optical axis of the light emitting element 121#0 is directed toward the same direction as that of the optical axis of the corresponding light receiving element 111#0. The transmitter 122#0 may include an FPGA and/or an SoC. The transmitter 122#0 performs signal processing on a transmission signal output by the controller 130, converts the signal after the signal processing, and outputs the converted signal to the light emitting element 121#0. At least a part of the transmitter 122#0 may be integrated with another transmitter 122 (e.g., transmitter 122#1). At least a part of the transmitter 122#0 may be integrated with the receivers 112.

The controller 130 controls an overall operation of the terminal apparatus 100. The operation of the above-described terminal apparatus 100 and the operation of the below-described terminal apparatus 100 may be operations performed under control of the controller 130. For example, the controller 130 controls the plurality of light receivers/emitters 101. The controller 130 includes at least one processor 131 and at least one memory 132. The memory 132 stores a program to be executed by the processor 131 and information to be used for processing by the processor 131. The processor 131 may include a digital signal processor and a CPU. The digital signal processor performs modulation and demodulation, coding and decoding, and the like on digital signals. The CPU executes the program stored in the memory to thereby perform various types of processing. At least a part of the controller 130 may be integrated with the receiver 112. At least a part of the controller 130 may be integrated with the transmitter 122.

The mechanism portion 140 includes a movement mechanism that moves the terminal apparatus 100 under control of the controller 130. The movement mechanism includes, for example, a motor and a screw coupled to a rotation shaft of the motor. The mechanism portion 140 may include an arm used for work underwater.

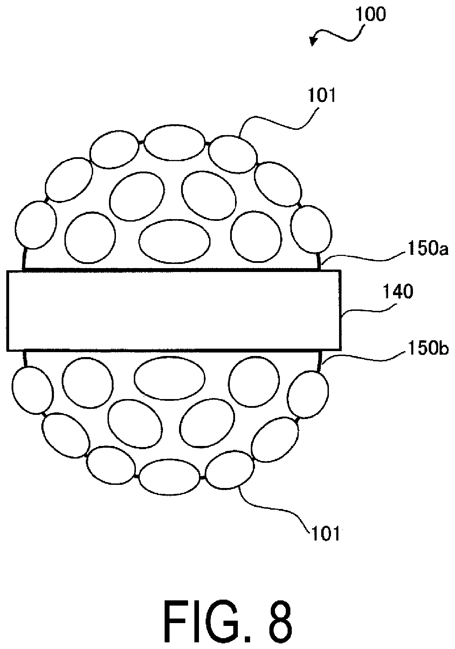

FIG. 8 is a diagram illustrating an outer appearance configuration example of the terminal apparatus 100 according to the present embodiment.

The terminal apparatus 100 includes a housing 150a on an upper side, a housing 150b on a lower side, and the mechanism portion 140 provided between the housing 150a and the housing 150b. Each of the housing 150a and the housing 150b has a hemispherical shape, and forms a spherical shape of the terminal apparatus 100 as a whole. Each of the housing 150a and the housing 150b includes on the surface thereof the plurality of light receivers/emitters 101 arranged in a dispersed manner. Each light receiver/emitter 101 includes a set of the at least one light receiving element 111 and the at least one light emitting element 121. Such a configuration enables the terminal apparatus 100 to perform optical communication with the base station apparatuses 200 in various directions.

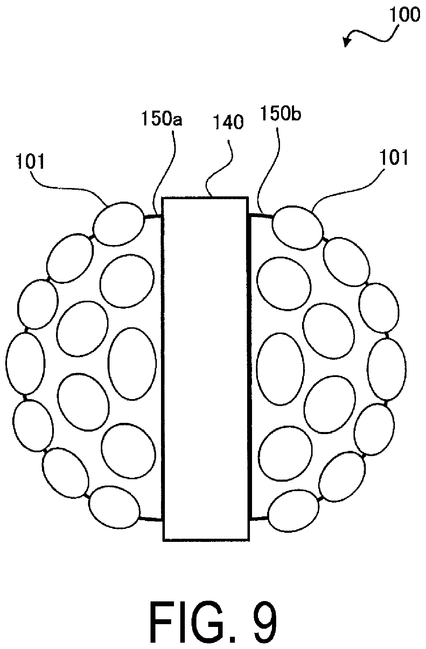

FIG. 9 is a diagram illustrating a first variation of an outer appearance configuration of the terminal apparatus 100 according to the present embodiment.

In the present variation, the terminal apparatus 100 includes the housing 150a on the left side, the housing 150b on the right side, and the mechanism portion 140 provided between the housing 150a and the housing 150b. Each of the housing 150a and the housing 150b has a hemispherical shape, and forms a spherical shape of the terminal apparatus 100 as a whole. Each of the housing 150a and the housing 150b includes on the surface thereof the plurality of light receivers/emitters 101 arranged in a dispersed manner. Each light receiver/emitter 101 includes a set of the at least one light receiving element 111 and the at least one light emitting element 121.

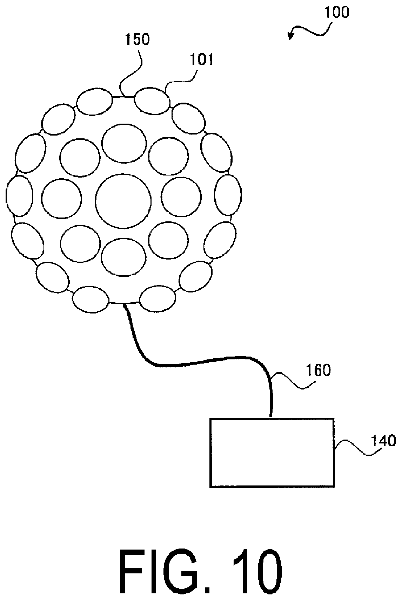

FIG. 10 is a diagram illustrating a second variation of the outer appearance configuration of the terminal apparatus 100 according to the present embodiment.

In the present variation, the terminal apparatus 100 includes the housing 150 of the spherical shape, and the mechanism portion 140 connected with the housing 150 through a cable 160. The housing 150 has a spherical shape. The housing 150 includes on the surface thereof the plurality of light receivers/emitters 101 arranged in a dispersed manner. Each light receiver/emitter 101 includes a set of the at least one light receiving element 111 and the at least one light emitting element 121.

### Example of Optical Communication

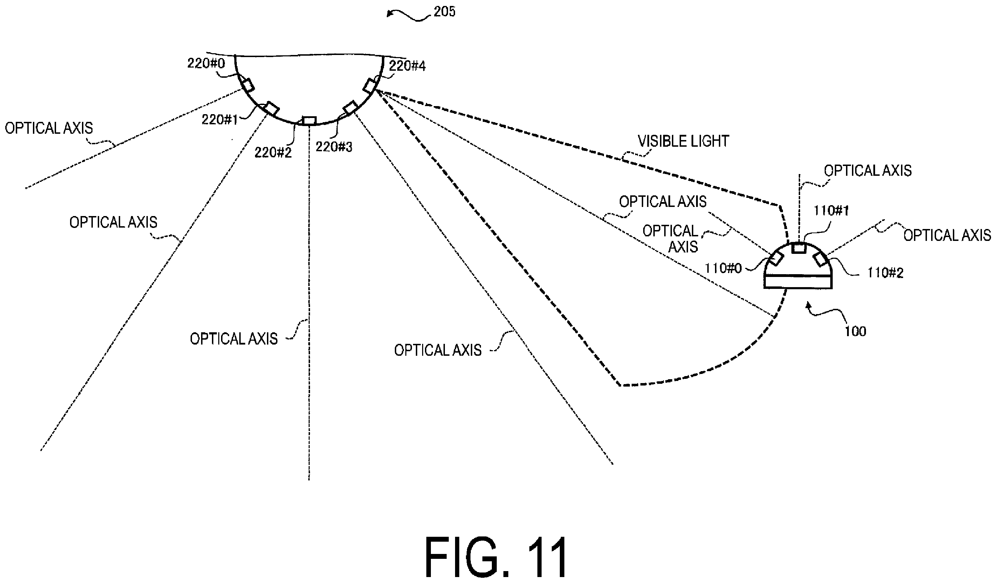

FIG. 11 is a diagram illustrating DL communication that is an example of optical communication according to the present embodiment. In the illustrated example, regarding the DL communication, the cross section of the optical communicator 205 of the base station apparatus 200 and the cross section of the terminal apparatus 100 are briefly illustrated.

In the optical communicator 205 of the base station apparatus 200, the plurality of light emitters 220 is arranged such that the angle formed between the optical axis of the one light emitter 220 and the optical axis of another light emitter 220 increases as the distance between the one light emitter 220 and the other light emitter 220 increases. For example, the angle formed between the optical axis of the light emitter 220#0 and the optical axis of a light emitter 220#2 that is not adjacent to the light emitter 220#0 is larger than the angle formed between the optical axis of the light emitter 220#0 and the optical axis of a light emitter 220#1 that is adjacent to the light emitter 220#0.

The optical communicator 205 of the base station apparatus 200 associates with the terminal apparatus 100 a light emitter 220#4 (light receiver/emitter #4) associated with the direction in which the terminal apparatus 100 is located, and performs optical communication with the terminal apparatus 100 using the light emitter 220#4 (light receiver/emitter #4). The terminal apparatus 100 associates with the base station apparatus 200 the light receiver 110#0 (light receiver/emitter #0) associated with the direction in which the base station apparatus 200 is located, and performs optical communication with the base station apparatus 200 using the light receiver 110#0 (light receiver/emitter #0).

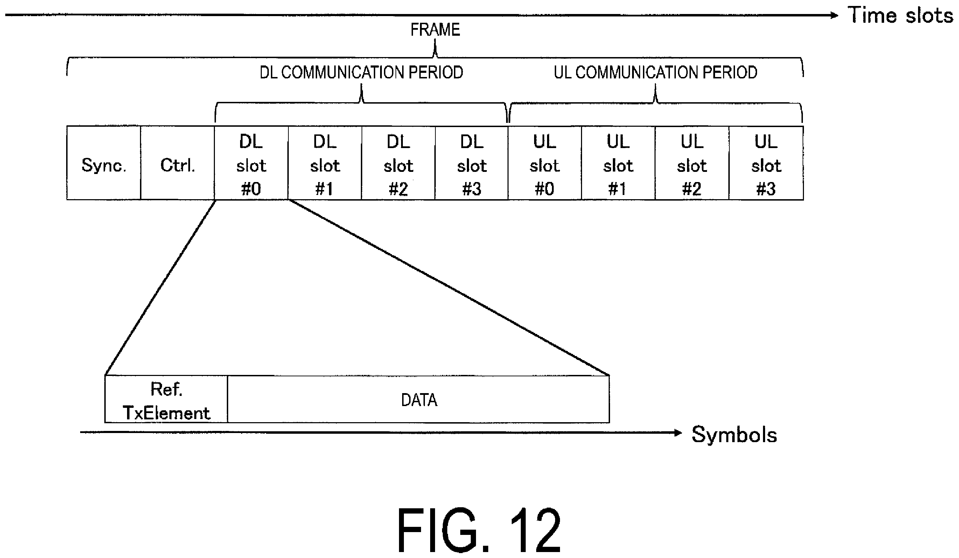

FIG. 12 is a diagram illustrating a configuration example of a communication frame used by the optical communication system 1 according to the present embodiment. Although one communication frame includes 10 time slots in the illustrated example, the number of time slots included in one communication frame is not limited to 10. Note that each time slot includes the predetermined number of symbol sections.

In this frame configuration example, the communication frame includes one synchronization slot (Sync.), one control slot (Ctrl.), four DL slots #0 to #3, and four UL slots #0 to #3. In this regard, in a scenario that a data amount of UL communication is larger than that of DL communication, UL slots in a communication frame may be provided more than DL slots.

The synchronization slot (Sync.) is a time slot in which the base station apparatus 200 transmits a synchronization light signal (and a reference light signal unique to the base station apparatus). The terminal apparatus 100 identifies the base station apparatus 200 based on the synchronization optical signal received from the base station apparatus 200, and establishes or maintains synchronization with the base station apparatus 200 by using the synchronization optical signal. Note that the reference light signal unique to the base station apparatus may be transmitted in all slots other than the UL slot. The reference light signal is used by the terminal apparatus 100 to measure a reception intensity (reference signal intensity) from the base station apparatus 200.

The control slot (Ctrl.) is a time slot in which the base station apparatus 200 transmits a control optical signal. The control light signal includes, for example, scheduling information indicating DL and UL resource allocations (e.g., time slot allocations). The terminal apparatus 100 recognizes own time slot allocation by, for example, a control light signal received from the base station apparatus 200.

The DL slots #0 to #3 constitute a DL communication period. The base station apparatus 200 allocates each of the DL slots #0 to #3 to the one or more terminal apparatuses 100. The base station apparatus 200 transmits a DL data optical signal in each DL slot. A light emitting element-specific reference signal (Ref.TxElement) and a data optical signal may be arranged in each DL slot in a time division manner.

The UL slots #0 to #3 constitute a UL communication period. The base station apparatus 200 allocates each of the UL slots #0 to #3 to the one or more terminal apparatuses 100. The terminal apparatus 100 transmits a UL data optical signal in the assigned UL slot.

The base station apparatus 200 can perform simultaneous communication with the plurality of terminal apparatuses 100 located in mutually different directions. More specifically, the base station apparatus 200 can spatially multiplex the plurality of terminal apparatuses 100 located in mutually different directions. Therefore, the base station apparatus 200 may allocate one DL slot or one UL slot to the plurality of terminal apparatuses 100.

### Configuration Example of Management Apparatus

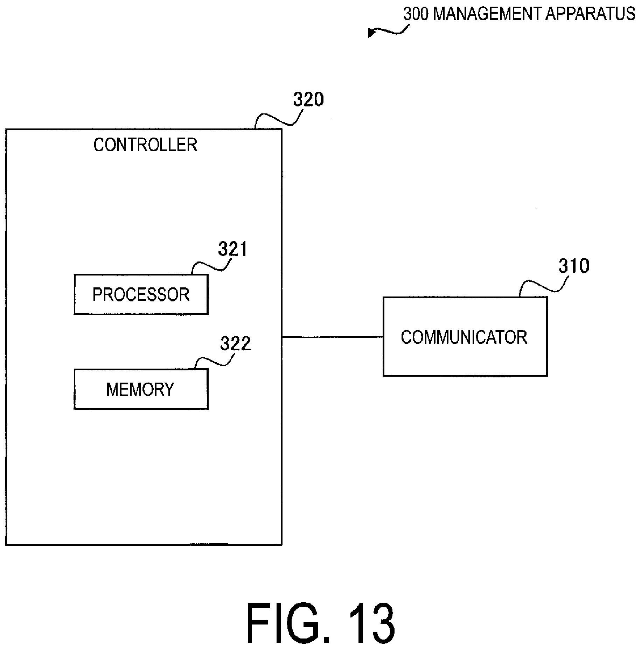

FIG. 13 is a diagram illustrating a block configuration example of the management apparatus 300 according to the present embodiment. The management apparatus 300 includes a communicator 310 and a controller 320.

The communicator 310 is connected to the network 10 and performs communication with each base station apparatus 200 via the network 10. The communicator 310 may perform direct wireless communication with each base station apparatus 200 without the network 10.

The controller 320 controls an overall operation of the management apparatus 300. The operation of the above-described management apparatus 300 and the operation of the below-described management apparatus 300 may be operations performed under control of the controller 320. For example, the controller 320 controls the communicator 310. The controller 320 includes at least one processor 321 and at least one memory 322. The memory 322 stores a program to be executed by the processor 321 and information to be used for processing by the processor 321. The processor 321 may include a CPU. The CPU executes the program stored in the memory to thereby perform various types of processing.

In the management apparatus 300 configured as described above, the controller 320 determines the arrangement position (the latitude, the longitude, and the depth) of each base station apparatus 200, and notifies each base station apparatus 200 of instruction information for designating the arrangement position. More specifically, the controller 320 controls the communicator 310 to transmit instruction information indicating the determined arrangement position to each base station apparatus 200. Thus, the position of each base station apparatus 200 can be arbitrarily set, and each base station apparatus 200 can be moved to or maintained at an arbitrary position.

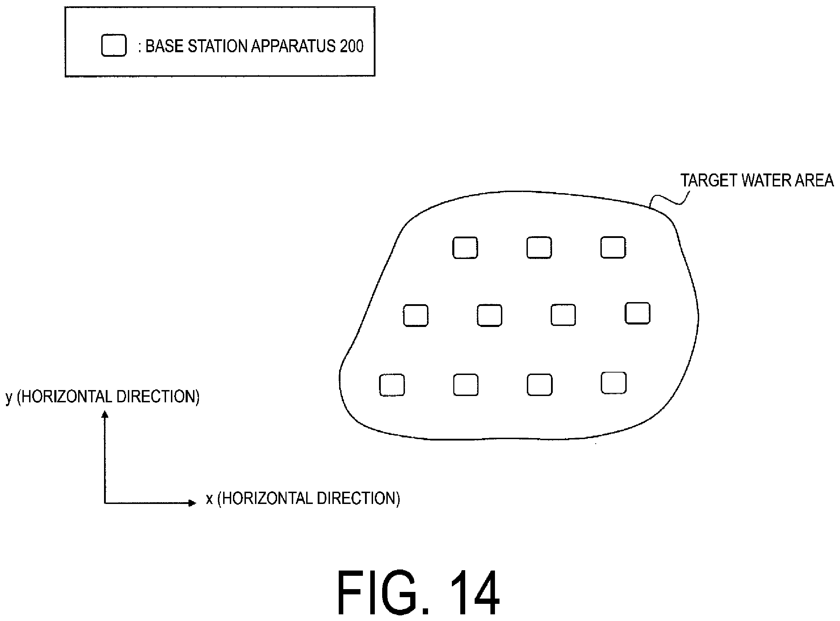

In the present embodiment, the controller 320 acquires map information on a target water area that is a coverage area of optical communication (hereinafter, also referred to simply as a "target water area"). FIG. 14 is a diagram for explaining an operation example of the controller 320 of the management apparatus 300 according to the present embodiment. In the illustrated example, the target water area is a two-dimensional water area defined by an x axis and a y axis in the horizontal direction, and the map information is two-dimensional map information. For example, the target water area may be an area underwater in which an underwater investigation and/or work is performed using the terminal apparatus 100. The controller 320 determines the arrangement position (the latitude and the longitude) of each base station apparatus 200 based on the acquired map information. In the illustrated example, the controller 320 determines to arrange the base station apparatuses 200 at intervals in the horizontal direction (an x axis direction and a y axis direction) such that the communication areas of the base station apparatuses 200 cover the target water area.

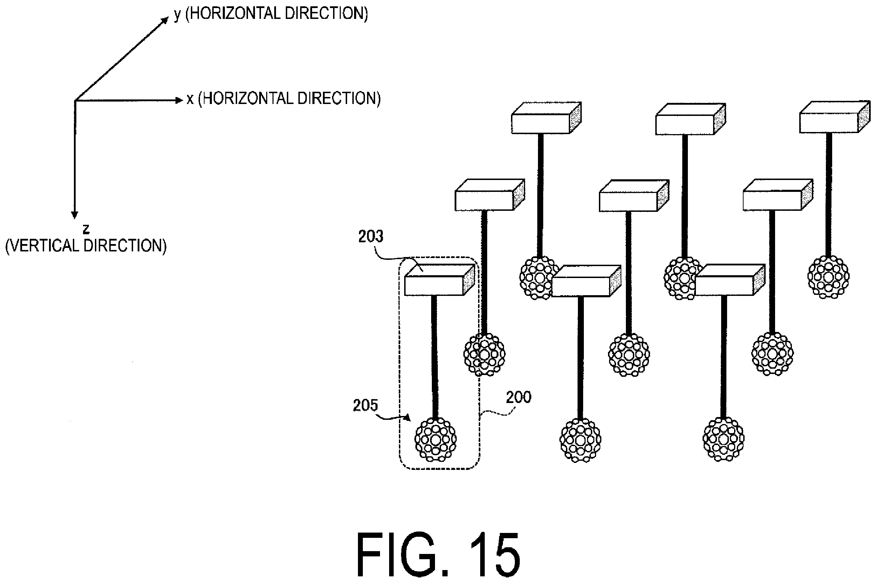

FIG. 15 is a diagram for explaining an operation example of the controller 320 of the management apparatus 300 according to the present embodiment. The target water area may be a three-dimensional water area defined by an x axis and a y axis in the horizontal direction and a z axis in the vertical direction, and the map information may be three-dimensional map information. The controller 320 may determine the arrangement position (the latitude, the longitude, and the depth) of each base station apparatus 200 based on the acquired three-dimensional map information.

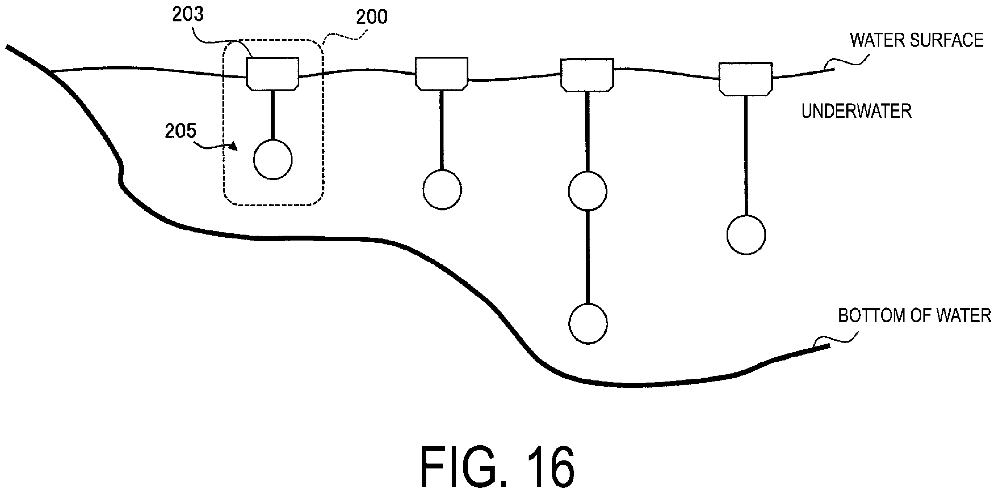

FIG. 16 is a diagram for explaining an operation example of the controller 320 of the management apparatus 300 according to the present embodiment. In the illustrated example, in the target water area, a bottom of water is not flat, and the water depth from a water surface to a bottom of water is uneven. In this case, the controller 320 determines an arrangement depth of each base station apparatus 200 (each optical communicator 205) in the vertical direction such that the communication area of each base station apparatus 200 covers the target water area.

In the present embodiment, the controller 320 further acquires environment information indicating an optical environment in the target water area, and adjusts the intervals between the base station apparatuses 200 (more specifically, the intervals between the optical communicators 205) based on the acquired environment information. The intervals are intervals in the horizontal direction and/or intervals in the vertical direction. Thus, the controller 320 can appropriately adjust the intervals between the base station apparatuses 200 (the intervals between the optical communicators 205).

The environment information may be information indicating optical environment of at least one of turbidity in the target water area or illuminance in the target water area. The controller 320 may acquire environment information indicating turbidity in the target water area from each base station apparatus 200. The controller 320 may acquire the environment information from the turbidity sensor provided separately from each base station apparatus 200. The controller 320 may acquire the environment information indicating the illuminance in the target water area from each base station apparatus 200. The controller 320 may acquire the environment information from the illuminance sensor provided separately from each base station apparatus 200.

The controller 320 may acquire the environment information indicating the illuminance by estimating the illuminance based on current time and weather and/or a current season for the target water area. The controller 320 may acquire weather information and/or current season information on the target water area from an external server.

For example, the controller 320 may specify or estimate each time of sunrise and sunset based on the current season. The controller 320 may estimate that the illuminance in the target water area is high in response to the current time being time from the sunrise to the sunset. On the other hand, the controller 320 may estimate that the illuminance in the target water area is low in response to the current time not being time from the sunrise to the sunset.

The controller 320 may estimate the illuminance in the target water area based on the current weather. For example, the controller 320 may estimate that the illuminance of the target water area is low in response to the weather of the target water area being rain, snow, or cloudy. On the other hand, the controller 320 may estimate that the illuminance in the target water area is high in response to the weather in the target water area being sunny.

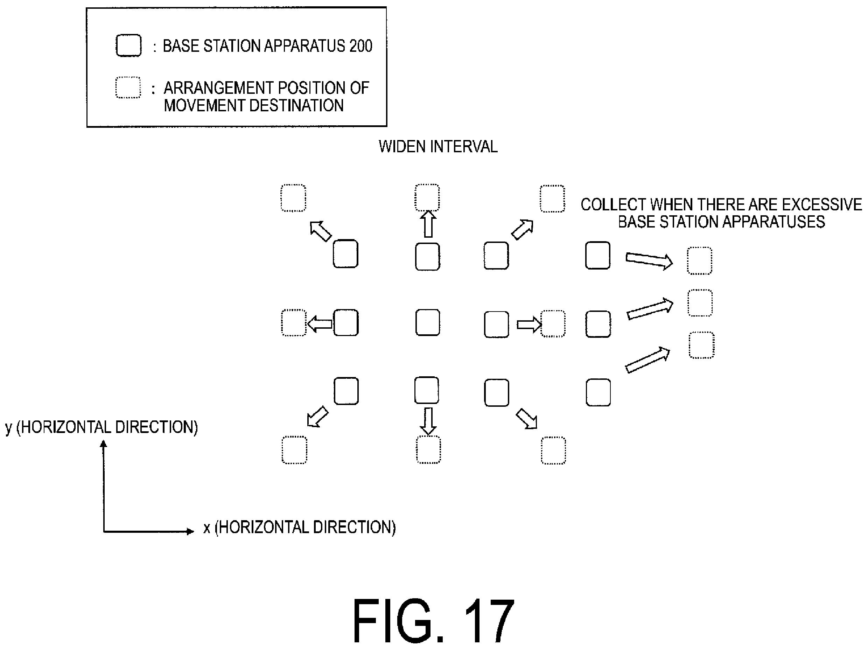

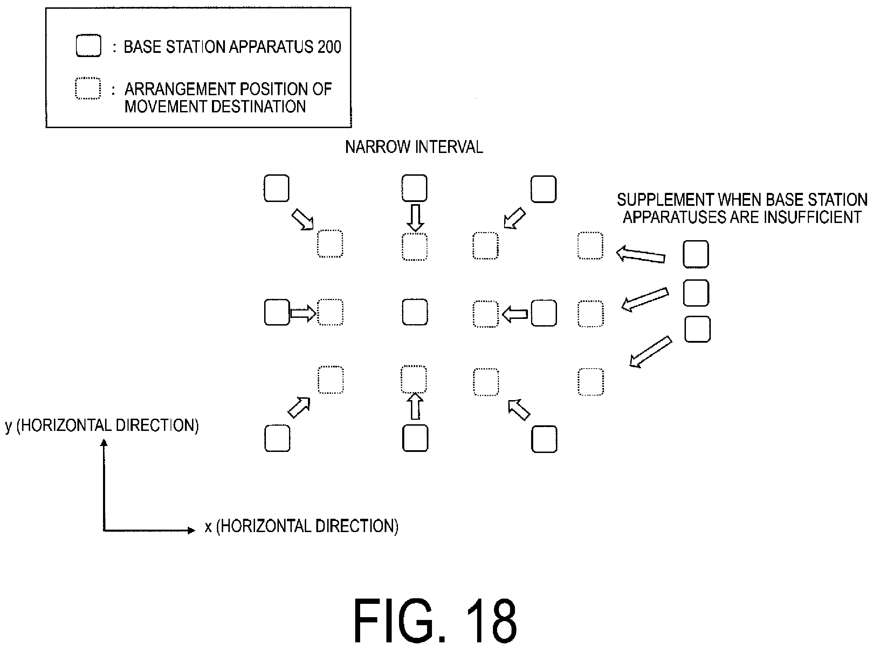

FIGs. 17 and 18 are diagrams for explaining an operation example of the controller 320 of the management apparatus 300 according to the present embodiment. As illustrated in FIG. 17, the controller 320 may perform adjustment to widen the intervals between the base station apparatus 200 (the intervals between the optical communicators 205) more as the turbidity in the target water area is lower. The controller 320 may perform adjustment to widen the intervals between the base station apparatus 200 more as the illuminance in the target water area is lower. Although the intervals between the base station apparatuses 200 are widened in the horizontal direction in the illustrated example, the intervals between the optical communicators 205 may be widened in the vertical direction.

The controller 320 may determine the arrangement position of each base station apparatus 200 in consideration of the turbidity and/or the illuminance in the target water area at a time of initial installation of each base station apparatus 200 in the target water area. After the initial installation of each base station apparatus 200 in the target water area, the controller 320 may periodically determine and update the arrangement position of each base station apparatus 200 in consideration of the turbidity and/or the illuminance in the target water area.

When the intervals between the base station apparatuses 200 are widened in the horizontal direction, there may be the excessive base station apparatuses 200 in the target water area. The controller 320 may perform control of moving the excessive base station apparatuses 200 to collection positions (e.g., a ship, a coast, or the like). Thus, the excessive base station apparatuses 200 can be collected.

As illustrated in FIG. 18, the controller 320 may perform adjustment to narrow the intervals between the base station apparatuses 200 (the intervals between the optical communicators 205) more as the turbidity in the target water area is higher. The controller 320 may perform adjustment to narrow the intervals between the base station apparatuses 200 more as the illuminance in the target water area is higher. Although the intervals between the base station apparatuses 200 are narrowed in the horizontal direction in the illustrated example, the intervals between the optical communicators 205 may be narrowed in the vertical direction. When the intervals between the base station apparatuses 200 are narrowed in the horizontal direction, shortage of the base station apparatuses 200 may occur in the target water area. In this case, the controller 320 may perform control of moving the additional base station apparatuses 200 to the arrangement positions of the target water area.

The controller 320 may further acquire tide information (so-called tide graph information) on a tide in the target water area. The controller 320 may adjust the arrangement depth (i.e., the position in the vertical direction) of each base station apparatus 200 (each optical communicator 205) based on the acquired tide information (and the three-dimensional map information). For example, under the assumption that a coverage area is constructed near the bottom of water (sea bottom), the controller 320 may lift down each base station apparatus 200 (each optical communicator 205) in the vertical direction in response to the tide being high at the current time and the water surface (e.g., sea surface) being rising. On the other hand, the controller 320 may lift up each base station apparatus 200 (each optical communicator 205) in the vertical direction in response to the tide being low at the current time and the water surface (e.g., sea surface) being lowering.

In the present embodiment, the controller 320 further acquires capability information indicating optical communication capability of each base station apparatus 200, and adjusts the intervals between the base station apparatuses 200 (more specifically, the intervals between the optical communicators 205) based on the acquired capability information. The intervals are intervals in the horizontal direction and/or intervals in the vertical direction. Thus, the intervals between the base station apparatuses 200 (the intervals between the optical communicators 205) can be appropriately adjusted.

For example, the capability information of the base station apparatus 200 is information indicating communication capability of at least one selected from the group consisting of a light emission intensity of the light emitting element, a light reception sensitivity of the light receiving element, a directivity angle of the light emitting element and/or the light receiving element, and the degree of light concentration of the light emitting element and/or the light receiving element. The controller 320 may determine that the optical communication capability of the base station apparatus 200 is high in response to the light emission intensity being high, the light reception sensitivity being high, the directivity angle being narrow, and/or the degree of light concentration being high. On the other hand, the controller 320 may determine that the optical communication capability of the base station apparatus 200 is low in response to the light emission intensity being weak, the light reception sensitivity being low, the directivity angle being wide, and/or the degree of light concentration being low.

At the time of initial installation of each base station apparatus 200 in the target water area, the controller 320 may determine the arrangement position of each base station apparatus 200 in consideration of the optical communication capability of each base station apparatus 200. For example, the controller 320 may perform adjustment to narrow the intervals between the base station apparatuses 200 (the intervals between the optical communicators 205) more as the optical communication capability of each base station apparatus 200 is lower. The controller 320 may perform adjustment to widen the intervals between the base station apparatuses 200 more as the optical communication capability of each base station apparatus 200 is higher. The controller 320 may adjust the intervals between the base station apparatuses 200 in the horizontal direction. The controller 320 may adjust the intervals between the optical communicators 205 in the vertical direction.

### Operation Flow Example of Management Apparatus

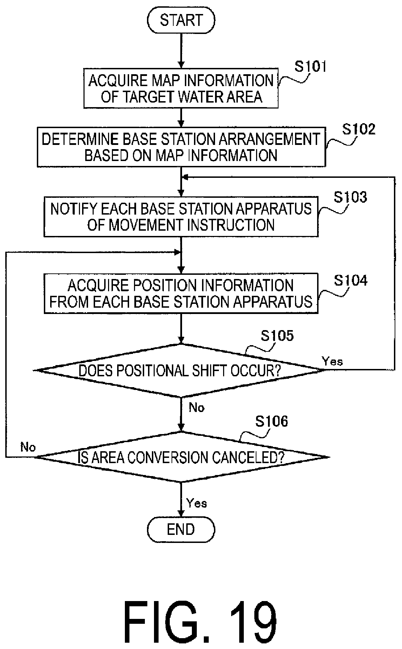

FIG. 19 is a diagram for explaining a first operation flow example of the management apparatus 300 according to the present embodiment.

In step S101, the management apparatus 300 acquires the map information of the target water area.

In step S102, the management apparatus 300 determines the arrangement position of each base station apparatus 200 based on the map information acquired in step S101. The determined arrangement position may be a two-dimensional position of a longitude and a latitude. The arrangement position may be a three-dimensional position of a longitude, a latitude and a depth. The management apparatus 300 may determine the arrangement position of each base station apparatus 200 in consideration of the capability information of each base station apparatus 200, too. More specifically, the management apparatus 300 may adjust the arrangement interval of each base station apparatus 200 based on the capability information of each base station apparatus 200.

In step S103, the management apparatus 300 notifies each base station apparatus 200 of a movement instruction based on the arrangement position determined in step S102. Each base station apparatus 200 moves the own optical communicator 205 to the designated arrangement position based on the movement instruction.

In step S104, the management apparatus 300 acquires (collects) the position information obtained by each base station apparatuses 200 by performing positioning.

In step S105, the management apparatus 300 determines whether the current position of each base station apparatus 200 collected in step S104 is a position out of the arrangement position (also referred to as a "designated arrangement position") determined (designated) in step S102. That is, the management apparatus 300 determines whether the position of each base station apparatus 200 is shifted. For example, the positional shift of the base station apparatus 200 may occur due to wind and/or an ocean current.

If there is the base station apparatus 200 whose position has been shifted (step S105: Yes), in step S103, the management apparatus 300 gives a notification of a movement instruction to return to the designated arrangement position to the base station apparatus 200 whose position has been shifted. Then, the management apparatus 300 may acquire position information of the base station apparatus 200 whose position has been shifted, and check whether the base station apparatus 200 has returned to the designated arrangement position. When the base station apparatus 200 does not return to the designated arrangement position even after a predetermined time passes, the management apparatus 300 may perform control of arranging another base station apparatus 200 at the designated arrangement position. Note that, when the base station apparatus 200 cannot be arranged at the designated arrangement position even if such control is performed, that is, when another base station apparatus 200 cannot be moved to and/or maintained at the designated arrangement position, the management apparatus 300 may assume that the base station apparatus 200 cannot be arranged at the designated arrangement position. For example, wind and/or an ocean current may produce positions at which the base station apparatuses 200 cannot be arranged. In this case, the management apparatus 300 may redetermine the arrangement position of each base station apparatus 200 and thus rearrange the base station apparatus 200 while avoiding the arrangement position. That is, the management apparatus 300 may redetermine the arrangement position of each base station apparatus 200 in step S102 to make an arrangement pattern different from the previous arrangement pattern.

On the other hand, if there is no base station apparatus 200 whose position has been shifted (step S105: No), in step S106, the management apparatus 300 determines whether to cancel the coverage area (i.e., whether to cancel area conversion of optical communication in the target water area). When, for example, an underwater investigation and/or work that uses the terminal apparatus 100 is completed, the management apparatus 300 determines to cancel the coverage area.

When the coverage area is canceled (step S106: Yes), the management apparatus 300 may instruct each base station apparatus 200 to end the optical communication, and may perform control of moving each base station apparatus 200 to the collection position. For example, the management apparatus 300 designates a position of a ship, a coast, or the like as the collection position to each base station apparatus 200, and moves each base station apparatus 200 to the collection position.

On the other hand, when the coverage area is not canceled (step S106: No), the management apparatus 300 returns the processing to step S104.

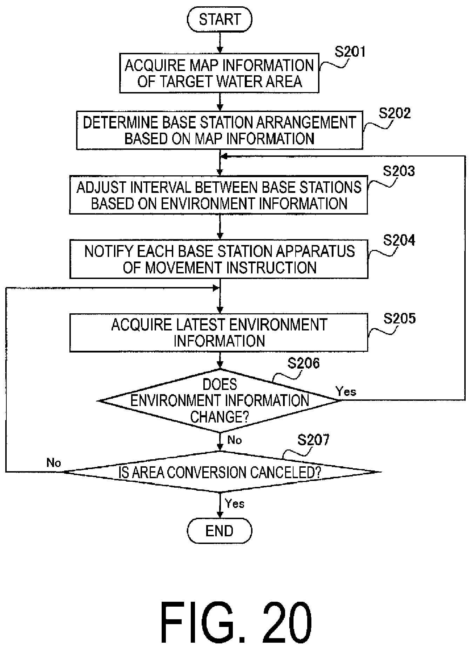

FIG. 20 is a diagram for explaining a second operation flow example of the management apparatus 300 according to the present embodiment. This operation flow example is a flow example where the environment information is considered. Although the above-described positional shift determination is omitted in the illustrated example, the positional shift determination may be also performed in this operation flow example.

In step S201, the management apparatus 300 acquires the map information of the target water area.

In step S202, the management apparatus 300 determines the arrangement position of each base station apparatus 200 based on the map information acquired in step S201. The determined arrangement position may be a two-dimensional position of a longitude and a latitude. The arrangement position may be a three-dimensional position of a longitude, a latitude and a depth. The management apparatus 300 may determine the arrangement position of each base station apparatus 200 in consideration of the capability information of each base station apparatus 200, too. More specifically, the management apparatus 300 may adjust the arrangement interval of each base station apparatus 200 based on the capability information of each base station apparatus 200.

In step S203, the management apparatus 300 acquires the environment information. The management apparatus 300 may determine (confirm) the arrangement position of each base station apparatus 200 by adjusting the arrangement interval of each base station apparatus 200 based on the acquired environment information.

In step S204, the management apparatus 300 notifies each base station apparatus 200 of a movement instruction based on the arrangement position determined (confirmed) in step S203. Each base station apparatus 200 moves the own optical communicator 205 to the designated arrangement position based on the movement instruction.

In step S205, the management apparatus 300 acquires (collects) the position information obtained by each base station apparatus 200 by performing positioning.

In step S205, the management apparatus 300 acquires the latest environment information. The management apparatus 300 may acquire latest environment information from each base station apparatus 200.

In step S206, the management apparatus 300 determines whether the latest environment information acquired in step S205 has changed from previously acquired environment information. If the latest environment information acquired in step S205 has changed from the previously acquired environment information (step S206: Yes), in step S203, the management apparatus 300 determines the arrangement position of each base station apparatus 200 by adjusting the arrangement interval of each base station apparatus 200 based on the latest environment information.

On the other hand, if the latest environment information acquired in step S205 has not changed from the previously acquired environment information (step S206: No), in step S207, the management apparatus 300 determines whether to cancel the coverage area (i.e., whether to cancel the area conversion of the optical communication in the target water area). When, for example, an underwater investigation and/or work that uses the terminal apparatus 100 is completed, the management apparatus 300 determines to cancel the coverage area.

If the coverage area is canceled (step S207: Yes), the management apparatus 300 may instruct each base station apparatus 200 to end the optical communication, and may perform control of moving each base station apparatus 200 to the collection position. For example, the management apparatus 300 designates a position of a ship, a coast, or the like as the collection position to each base station apparatus 200, and moves each base station apparatus 200 to the collection position.

On the other hand, if the coverage area is not canceled (step S207: No), the management apparatus 300 returns the processing to step S205.

### First Variation of Operation of Optical Communication System

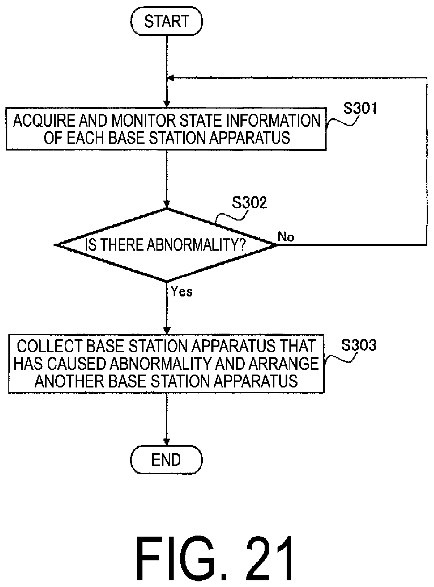

FIG. 21 is a diagram illustrating a first variation of an operation of the optical communication system 1 according to the above-described embodiment.

In step S301, the management apparatus 300 acquires state information indicating the state of each base station apparatus 200, and monitors the state of each base station apparatus 200. For example, the management apparatus 300 monitors state information on a remaining battery of each base station apparatus 200 and/or whether there is a failure (e.g., malfunction) of each block by communicating with each base station apparatus 200. Each base station apparatus 200 may specify that abnormality has occurred in each base station apparatus 200 (e.g., the remaining battery of each base station apparatus 200 has fallen below a threshold value), and notify the management apparatus 300 of error information indicating contents of the abnormality as state information.

In step S302, the management apparatus 300 detects abnormality in any one of the base station apparatuses 200 based on the state information acquired in step S301. For example, the management apparatus 300 may compare the remaining battery of the base station apparatus 200 with a threshold value, and determine that abnormality has occurred in the base station apparatus 200 when the remaining battery falls below the threshold value. The management apparatus 300 may monitor an operation state of each block of the base station apparatus 200, and determine that abnormality has occurred in the base station apparatus 200 when there is a block indicating an operation abnormality. When receiving error information from any one of the base station apparatuses 200, the management apparatus 300 may determine that abnormality has occurred in the base station apparatus 200.

If abnormality is detected in any one of the base station apparatuses 200 (step S302: Yes), in step S303, the management apparatus 300 performs control of moving the base station apparatus 200 to the collection position, and arranging another base station apparatus 200 at the arrangement position of the base station apparatus 200. Thus, production of a dead zone of optical communication, that is, production of a coverage hole can be suppressed.

### Second Variation of Operation of Optical Communication System

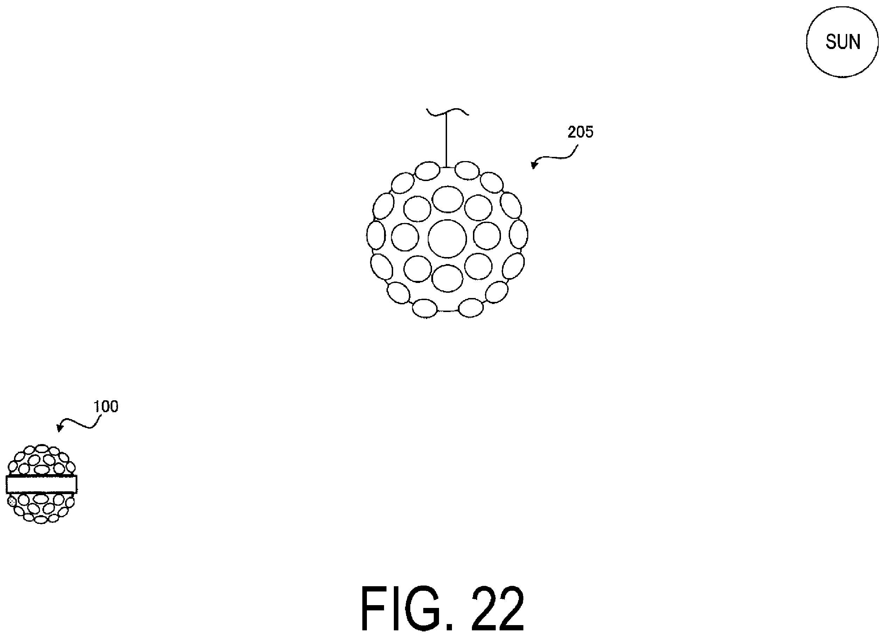

FIG. 22 is a diagram for explaining a second variation of the operation of the optical communication system 1 according to the above-described embodiment. It is concerned that, when the base station apparatus 200 (optical communicator 205) is at a backlight position as viewed from the terminal apparatus 100 as illustrated in FIG. 22, that is, when the terminal apparatus 100, the base station apparatus 200 (the optical communicator 205), and the sun are aligned on a straight line, sunlight disturbance interferes with communication light.

In the present variation, the base station apparatus 200 and/or the management apparatus 300 specify a first direction in which sunlight arrives and a second direction in which the terminal apparatus 100 that is performing optical communication with the base station apparatus 200 is located. For example, in the base station apparatus 200 and/or the management apparatus 300, the optical communicator 205 specifies as the first direction an optical axis direction of the light receiver/emitter 201 on which sunlight is incident, and the optical communicator 205 specifies as the second direction the optical axis direction of the light receiver/emitter 201 that is performing optical communication with the terminal apparatus 100.

The base station apparatus 200 and/or the management apparatus 300 perform control of moving the base station apparatus 200 from a current arrangement position based on the determination that the first direction and the second direction are on the same straight line. Thus, interference of the sunlight disturbance with the communication light can be suppressed.

Here, that "the first direction and the second direction are on a straight line" is not limited to a case where the first direction and the second direction are the same direction, but includes a case where a difference between the first direction and the second direction is within a predetermined range. For example, the base station apparatus 200 and/or the management apparatus 300 may determine that the first direction and the second direction are on the straight line when a combination of the light receiver/emitter 201 on which the sunlight is incident and the light receiver/emitter 201 that is performing optical communication with the terminal apparatus 100 is a combination set in advance.

The base station apparatus 200 may move to shift an own arrangement position by a predetermined distance according to the determination. When a coverage hole is produced by shifting the position of the base station apparatus 200, the management apparatus 300 may make a movement instruction to another base station apparatus 200 such that another base station apparatus 200 complements the coverage hole.

### Third Variation of Operation of Optical Communication System

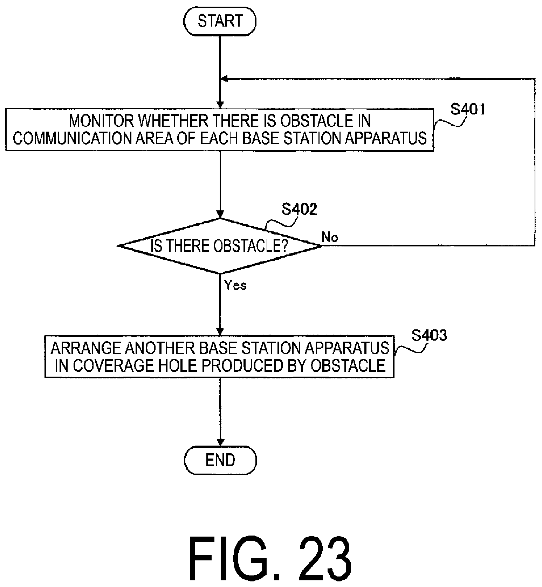

FIG. 23 is a diagram illustrating a third variation of the operation of the optical communication system 1 according to the above-described embodiment.

In step S401, the base station apparatus 200 and/or the management apparatus 300 monitor whether there is an obstacle in the communication area of the base station apparatus 200. For example, the obstacle may be a structure such as a ship, a buoy, or a fish preserve. The obstacle may be drifted matters such as a waste fishing gear, a marine debris, or a driftwood. For example, a camera may be provided in the base station apparatus 200 to monitor obstacles by image recognition. When there is a communication area in which optical communication is not performed for a long time, it may be assumed that there is an obstacle in the area. The base station apparatus 200 may perform reception simultaneously with transmission of a reference light signal, and monitor whether there is an obstacle according to whether there is reflection light from the obstacle.

If it is determined that there is an obstacle in the communication area of any one of the base station apparatuses 200 (step S402: Yes), in step S403, the management apparatus 300 gives, in response to detection of an obstacle in a communication area of the base station apparatus 200, a movement instruction to another base station apparatus 200 and thus complements a coverage hole generated by the obstacle. Thus, the coverage hole can be complemented by another base station apparatus 200.

### Variation of Configuration of Optical Communication System

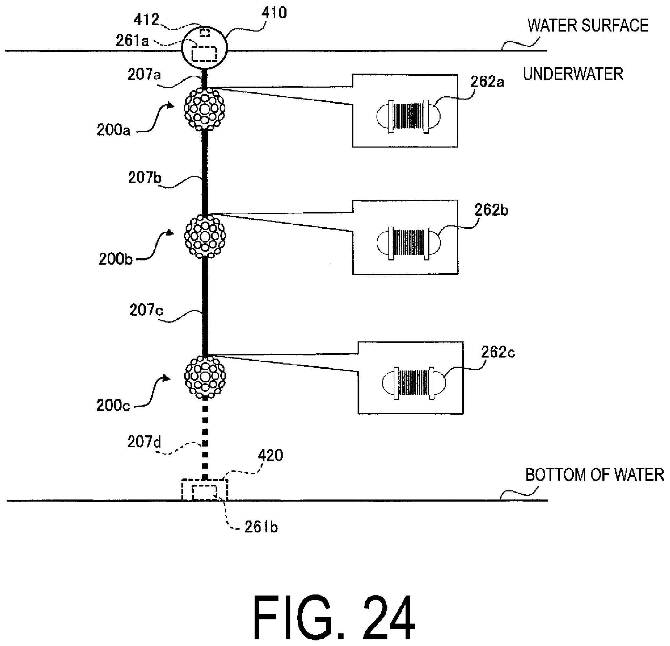

FIG. 24 is a diagram illustrating a variation of the configuration of the optical communication system 1 according to the above-described embodiment. According to the present variation, the body portion 203 and the optical communicator 205 are integrated in the base station apparatus 200.

In the illustrated example, the plurality of the base station apparatuses 200a to 200c form a base station group including the base station apparatuses 200 arranged at intervals in the vertical direction. The base station apparatuses 200 that are adjacent in the vertical direction are coupled by the coupling member 207. In the illustrated example, the base station apparatus 200a closest to the water surface is suspended from a floating member (buoy) 410 on the water surface by a coupling member 207a. The base station apparatus 200b is suspended from the base station apparatus 200a by a coupling member 207b. The base station apparatus 200c is suspended from the base station apparatus 200b by a coupling member 207c. In this regard, the base station apparatus 200a may be integrated with the floating member 410, and the base station apparatus 200a may be arranged on the water surface. In this case, the base station apparatus 200a may have a hemispherical configuration instead of the spherical configuration.

In each base station group, the base station apparatus 200c located at the deepest position may be coupled with a weight member 420 at the bottom of water through a coupling member 207d. In this regard, if each base station apparatus 200c has a sufficient weight, the weight member 420 may be unnecessary.

An upper portion of each base station apparatus 200 (the base station apparatus 200a to the base station apparatus 200c) is provided with the vertical movement mechanism 262 that winds and unwinds the coupling member 207. The vertical movement mechanism 262 may be an electric winch. More specifically, the upper portion of the base station apparatus 200a is provided with the vertical movement mechanism 262a that winds and unwinds the coupling member 207a. The vertical movement mechanism 262a may be controlled by the controller 230 of the base station apparatus 200a. The upper portion of the base station apparatus 200b is provided with the vertical movement mechanism 262b that winds and unwinds the coupling member 207b. The vertical movement mechanism 262b may be controlled by the controller 230 of the base station apparatus 200b. The upper portion of the base station apparatus 200c is provided with a vertical movement mechanism 262c that winds and unwinds the coupling member 207c. The vertical movement mechanism 262c may be controlled by the controller 230 of the base station apparatus 200c.

In this regard, the disclosure is not limited to the configuration where the vertical movement mechanism 262 is provided in the upper portion of each base station apparatus 200, and the vertical movement mechanism 262 may be provided in a lower portion of each base station apparatus 200. The disclosure is not limited to the configuration where the coupling member 207 can be wound and unwound, and there may be employed a configuration where a slide mechanism that is the vertical movement mechanism 262 is provided in the coupling member 207 to enable the coupling member 207 to extend and contract.

The floating member 410 may include a horizontal movement mechanism 261a for moving the base station group in the horizontal direction. The horizontal movement mechanism 261a may include a motor and a screw. When the horizontal movement mechanism 261a moves the floating member 410 on the water surface, the base station group (the base station apparatus 200a to the base station apparatus 200c) moves in the horizontal direction in response to the movement of the floating member 410. The horizontal movement mechanism 261a may be controlled by the controller 230 of the base station apparatus 200a via, for example, the coupling member 207a (cable).

When the base station group includes the weight member 420, the weight member 420 may include a horizontal movement mechanism 261b for moving the base station group in the horizontal direction. The horizontal movement mechanism 261b may include a motor and a crawler (caterpillar). When the horizontal movement mechanism 261b moves the weight member 420 to the bottom of water, the base station group (the base station apparatus 200a to the base station apparatus 200c) moves in the horizontal direction in response to the movement of the weight member 420. The horizontal movement mechanism 261b may be controlled by the controller 230 of the base station apparatus 200c via, for example, the coupling member 207d (cable).

In each base station group, a base station apparatus pair adjacent in the vertical direction can perform backhaul communication between the base stations via the coupling member 207 (cable) that couples the base station apparatus pair. For example, a pair of the base station apparatus 200a and the base station apparatus 200b can communicate via the coupling member 207b. The pair of the base station apparatus 200b and the base station apparatus 200c can communicate via the coupling member 207c. There may be employed a configuration where, instead of inter-base station communication via the coupling member 207 (cable), inter-base station communication is performed using the above-described laser communication device 263 (see FIG. 6).

The base station group may perform backhaul communication with the network 10 side. For example, the base station apparatus 200a may perform wireless communication with the network 10 using radio waves. In this regard, radio waves greatly attenuate underwater, and therefore it may be inappropriate to provide an antenna to the base station apparatus 200a underwater. Hence, in the illustrated example, an antenna 412 of the network communicator 241 (see FIG. 3) of the base station apparatus 200a is provided in the floating member 410. In this regard, when the base station apparatus 200a is arranged on the water surface, the antenna 412 for backhaul communication can be provided in the base station apparatus 200a. The base station apparatus 200a performs direct backhaul communication with the network 10. The base station apparatus 200b performs indirect backhaul communication with the network 10 via the base station apparatus 200a. The base station apparatus 200c performs indirect backhaul communication with the network 10 via the base station apparatus 200a and the base station apparatus 200b.

### Other Embodiments

In the above-described embodiment, an example where the terminal apparatus 100 and the base station apparatus 200 (optical communicator 205) are each formed into a spherical shape has been described. However, the terminal apparatus 100 and/or the base station apparatus 200 (optical communicator 205) may be formed into a polyhedron shape. In this case, each surface of the polyhedron may constitute the light receiver/emitter, and a set of the light emitting element and the light receiving element may be arranged on each surface. The terminal apparatus 100 and/or the base station apparatus 200 (optical communicator 205) may be formed into a bar shape as a whole. For example, the terminal apparatus 100 and/or the base station apparatus 200 (optical communicator 205) may form a prism, each side surface of the prism may form a light receiver/emitter, and a set of a light emitting element and a light receiving element may be arranged on each side surface.

A program that causes a computer to execute each processing performed by the terminal apparatus 100, the base station apparatus 200, or the management apparatus 300 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each processing performed by the terminal apparatus 100, the base station apparatus 200, or the management apparatus 300 may be integrated, and at least a part of the terminal apparatus 100, the base station apparatus 200, or the management apparatus 300 may be configured as a semiconductor integrated circuit (a chipset, or a System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least partially on". Similarly, the phrase "depending on/in response to" means both "depending only on/in response only to" and "depending at least partially on/in response at least partially to". The terms "include," "comprise" and variations thereof do not mean "include only items stated" but instead mean "may include only items stated" or "may include not only the items stated but also other items". "Obtain" or "acquire" may mean to obtain information from stored information, may mean to obtain information from information received from another apparatus, or may mean to obtain information by generating the information. The term "or" used in the present disclosure is not intended to be "exclusive or". Any references to elements using designations such as "first" and "second" used in the present disclosure do not generally limit the quantity or order of those elements. These designations may be used in the present disclosure as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

This application claims priority to Japanese Patent Application No. 2022-171106 (filed on October 26, 2022), the contents of which is incorporated herein by reference in their entirety.

The embodiment has been described above in detail with reference to the drawings, but specific configurations are not limited to those described above, and various design variation can be made without departing from the gist of the present disclosure.

### Supplementary Notes

Features relating to the embodiment described above will be described below as supplementary notes.

### Supplementary Note 1

A optical communication system (1) for performing optical communication underwater, the optical communication system (1) including:
a base station apparatus (200) configured to perform optical communication with a terminal apparatus (100) underwater; and
a movement mechanism (260) provided in the base station apparatus (200) or connected with the base station apparatus (200), wherein
the movement mechanism (260) moves the base station apparatus (200) on a water surface and/or underwater.

### Supplementary Note 2

The optical communication system (1) according to Supplementary Note 1, further including a management apparatus (300) configured to determine an arrangement position of the base station apparatus (200) and notify the base station apparatus (200) of instruction information for designating the arrangement position, wherein
the base station apparatus (200) includes
a positioner (270) configured to measure a position of the base station apparatus (200) and
a controller (230) configured to control, based on the position measured by the positioner (270), the movement mechanism (260) to move or maintain the base station apparatus (200) at the arrangement position designated.

### Supplementary Note 3

The optical communication system (1) according to Supplementary Note 2, wherein the base station apparatus (200) includes
a body portion (203) and
an optical communicator (205) configured to form a communication area for optical communication, and
the movement mechanism (260) includes
a horizontal movement mechanism (261) configured to move the body portion (203) in a horizontal direction and
a vertical movement mechanism (262) configured to move the optical communicator (205) in a vertical direction.

### Supplementary Note 4

The optical communication system (1) according to Supplementary Note 3, wherein the positioner (270) includes
a horizontal positioner (271) provided in the body portion (203) and configured to measure a latitude and a longitude of the body portion (203) and
a vertical positioner (272) provided in the body portion (203) or the optical communicator (205) and configured to measure a depth of the optical communicator (205).

### Supplementary Note 5

The optical communication system (1) according to Supplementary Note 4, wherein
the management apparatus (300) determines the latitude, the longitude, and the depth as the arrangement position of the base station apparatus (200).

### Supplementary Note 6

The optical communication system (1) according to any one of Supplementary Notes 2 to 5, wherein
the management apparatus (300)
acquires map information on a target water area as a coverage area of optical communication and
determines the arrangement position for each of a plurality of the base station apparatuses (200) including the base station apparatus (200) based on the map information.

### Supplementary Note 7

The optical communication system (1) according to Supplementary Note 6, wherein the management apparatus (300)
further acquires environment information indicating an optical environment in the target water area and
adjusts an interval between the plurality of the base station apparatuses (200) based on the environment information.

### Supplementary Note 8

The optical communication system (1) according to Supplementary Note 7, wherein the environment information is information indicating the optical environment of at least one of turbidity in the target water area or illuminance in the target water area.

### Supplementary Note 9

The optical communication system (1) according to Supplementary Note 8, wherein the management apparatus (300) acquires the environment information by estimating the illuminance based on current time and weather and/or a current season for the target water area.

### Supplementary Note 10

The optical communication system (1) according to any one of Supplementary Notes 6 to 9, wherein
the management apparatus (300)
acquires tide information on a tide in the target water area and
adjusts an arrangement depth for each of the plurality of the base station apparatuses (200) based on the tide information.

### Supplementary Note 11

The optical communication system (1) according to any one of Supplementary Notes 6 to 10, wherein
the management apparatus (300)
further acquires capability information indicating optical communication capability of each of the plurality of the base station apparatuses (200) and
adjusts an interval between the plurality of the base station apparatus (200) based on the capability information.

### Supplementary Note 12

The optical communication system (1) according to Supplementary Note 11, wherein the capability information is information indicating the optical communication capability of at least one selected from the group consisting of a light emission intensity of a light emitting element, a light reception sensitivity of a light receiving element, a directivity angle of the light emitting element and/or the light receiving element, and a degree of light concentration of the light emitting element and/or the light receiving element.

### Supplementary Note 13

The optical communication system (1) according to any one of Supplementary Notes 2 to 12, wherein
the management apparatus (300)
collects information indicating a position of each of the plurality of the base station apparatuses (200),
instructs a base station apparatus (200) at a position out of the arrangement position designated to return to the arrangement position, and
performs, when the base station apparatus (200) cannot return to the arrangement position designated, predetermined control of arranging another base station apparatus (200) at the arrangement position.

### Supplementary Note 14

The optical communication system (1) according to Supplementary Note 13, wherein the management apparatus (300) redetermines, when being unable to arrange the base station apparatus (200) at the arrangement position even by performing the predetermined control, the arrangement position of each of the plurality of the base station apparatuses (200) and thus rearranges the base station apparatus (200) while avoiding the arrangement position.

### Supplementary Note 15

The optical communication system (1) according to any one of Supplementary Notes 2 to 14, wherein
the management apparatus (300)
detects abnormality of the base station apparatus (200) based on state information indicating a state of the base station apparatus (200) and
performs control of moving the base station apparatus (200) to a collection position and arranging another base station apparatus (200) at an arrangement position of the base station apparatus (200) in response to detection of the abnormality.

### Supplementary Note 16

The optical communication system (1) according to any one of Supplementary Notes 2 to 15, wherein
the base station apparatus (200) at the arrangement position
specifies a first direction in which sunlight arrives and a second direction in which a terminal apparatus (100) that is performing optical communication with the base station apparatus (200) is located and
performs control of moving the base station apparatus (200) from the arrangement position based on determination that the first direction and the second direction are on a straight line.

### Supplementary Note 17

The optical communication system (1) according to any one of Supplementary Notes 2 to 16, wherein the management apparatus (300) performs, in response to detection of an obstacle in a communication area of the base station apparatus (200), control of arranging another base station apparatus (200) in a coverage hole generated by the obstacle.

### Supplementary Note 18

The optical communication system (1) according to any one of Supplementary Notes 2 to 17, wherein the management apparatus (300) instructs each base station apparatus (200) to end the optical communication and performs control of moving each base station apparatus (200) to a collection position in response to cancellation of the coverage area of the optical communication.

### Supplementary Note 19

A base station apparatus (200) to be used in an optical communication system (1) including: an optical communicator (205) configured to perform optical communication with a terminal apparatus (100) underwater; and
a movement mechanism (260) configured to move the base station apparatus (200) on a water surface and/or underwater.

### Supplementary Note 20

A management apparatus (300) to be used in an optical communication system (1) including: a communicator (310) configured to communicate with a base station apparatus (200) configured to perform optical communication with a terminal apparatus (100) underwater; and a controller (320) configured to determine an arrangement position of the base station apparatus (200) and notify the base station apparatus (200) of instruction information for designating the arrangement position.

### REFERENCE SIGNS

1: Optical communication system
10: Network
100: Terminal apparatus
101: Light receiver/emitter
110: Light receiver
111: Light receiving element
112: Receiver
120: Light emitter
121: Light emitting element
122: Transmitter
130: Controller
131: Processor
132: Memory
140: Mechanism portion
150: Housing
160: Cable
200: Base station apparatus
201: Light receiver/emitter
203: Body portion
205: Optical communicator
207: Coupling member
210: Light receiver
211: Light receiving element
212: Receiver
220: Light emitter
221: Light emitting element
222: Transmitter
230: Controller
231: Processor
232: Memory
240: Backhaul communicator
241: Network communicator
242: Inter-base station communicator
250: Housing
260: Movement mechanism
261: Horizontal movement mechanism
262: Vertical movement mechanism
263: Laser communication device
270: Positioner
271: Horizontal positioner
272: Vertical positioner
281: Turbidity sensor
282: Illuminance sensor
290: Hook portion
291: Rope
292: Cable
293: Laser communication device
300: Management apparatus
310: Communicator
320: Controller
321: Processor
322: Memory
410: Floating member
412: Antenna
420: Weight member

## Claims

1. A optical communication system for performing optical communication underwater, the optical communication system comprising:
a base station apparatus configured to perform optical communication with a terminal apparatus underwater; and
a movement mechanism provided in the base station apparatus or connected with the base station apparatus, wherein
the movement mechanism moves the base station apparatus on a water surface and/or underwater.

2. The optical communication system according to claim 1, further comprising
a management apparatus configured to determine an arrangement position of the base station apparatus and notify the base station apparatus of instruction information for designating the arrangement position, wherein
the base station apparatus comprises
a positioner configured to measure a position of the base station apparatus and
a controller configured to control, based on the position measured by the positioner, the movement mechanism to move or maintain the base station apparatus to or at the arrangement position designated.

3. The optical communication system according to claim 2, wherein
the base station apparatus comprises
a body portion and
an optical communicator configured to form a communication area for optical communication, and
the movement mechanism comprises
a horizontal movement mechanism configured to move the body portion in a horizontal direction and
a vertical movement mechanism configured to move the optical communicator in a vertical direction.

4. The optical communication system according to claim 3, wherein
the positioner comprises
a horizontal positioner provided in the body portion and configured to measure a latitude and a longitude of the body portion and
a vertical positioner provided in the body portion or the optical communicator and configured to measure a depth of the optical communicator.

5. The optical communication system according to claim 4, wherein the management apparatus determines the latitude, the longitude, and the depth as the arrangement position of the base station apparatus.

6. The optical communication system according to any one of claims 2 to 5, wherein
the management apparatus
acquires map information on a target water area as a coverage area of optical communication and
determines the arrangement position for each of a plurality of the base station apparatuses including the base station apparatus based on the map information.

7. The optical communication system according to claim 6, wherein
the management apparatus
further acquires environment information indicating an optical environment in the target water area and
adjusts an interval between the plurality of the base station apparatuses based on the environment information.

8. The optical communication system according to claim 7, wherein the environment information is information indicating the optical environment of at least one of turbidity in the target water area or illuminance in the target water area.

9. The optical communication system according to claim 8, wherein the management apparatus acquires the environment information by estimating the illuminance based on current time and weather and/or a current season for the target water area.

10. The optical communication system according to claim 6, wherein
the management apparatus
acquires tide information on a tide in the target water area and
adjusts an arrangement depth for each of the plurality of the base station apparatuses based on the tide information.

11. The optical communication system according to claim 6, wherein
the management apparatus
further acquires capability information indicating optical communication capability of each of the plurality of the base station apparatuses and
adjusts an interval between the plurality of the base station apparatuses based on the capability information.

12. The optical communication system according to claim 11, wherein the capability information is information indicating the optical communication capability of at least one selected from the group consisting of a light emission intensity of a light emitting element, a light reception sensitivity of a light receiving element, a directivity angle of the light emitting element and/or the light receiving element, and a degree of light concentration of the light emitting element and/or the light receiving element.

13. The optical communication system according to any one of claims 2 to 4, wherein
the management apparatus
collects information indicating a position of each of the plurality of the base station apparatuses,
instructs a base station apparatus at a position out of the arrangement position designated to return to the arrangement position, and
performs, when the base station apparatus cannot return to the arrangement position designated, predetermined control of arranging another base station apparatus at the arrangement position.

14. The optical communication system according to claim 13, wherein the management apparatus redetermines, when being unable to arrange the base station apparatus at the arrangement position even by performing the predetermined control, the arrangement position of each of the plurality of the base station apparatuses and thus rearranges the base station apparatus while avoiding the arrangement position.

15. The optical communication system according to any one of claims 2 to 4, wherein
the management apparatus
detects abnormality of the base station apparatus based on state information indicating a state of the base station apparatus and
performs control of moving the base station apparatus to a collection position and arranging another base station apparatus at an arrangement position of the base station apparatus in response to detection of the abnormality.

16. The optical communication system according to any one of claims 2 to 4, wherein
the base station apparatus at the arrangement position
specifies a first direction in which sunlight arrives and a second direction in which a terminal apparatus that is performing optical communication with the base station apparatus is located and
performs control of moving the base station apparatus from the arrangement position based on determination that the first direction and the second direction are on a straight line.

17. The optical communication system according to any one of claims 2 to 4, wherein the management apparatus gives, in response to detection of an obstacle in a communication area of the base station apparatus, a movement instruction to another base station apparatus and thus complements a coverage hole generated by the obstacle.

18. The optical communication system according to any one of claims 2 to 4, wherein the management apparatus instructs each base station apparatus to end the optical communication and performs control of moving each base station apparatus to a collection position in response to cancellation of the coverage area of the optical communication.

19. A base station apparatus to be used in an optical communication system, the base station apparatus comprising:
an optical communicator configured to perform optical communication with a terminal apparatus underwater; and
a movement mechanism configured to move the base station apparatus on a water surface and/or underwater.

20. A management apparatus to be used in an optical communication system, the management apparatus comprising:
a communicator configured to communicate with a base station apparatus configured to perform optical communication with a terminal apparatus underwater; and
a controller configured to determine an arrangement position of the base station apparatus and notify the base station apparatus of instruction information for designating the arrangement position.
